# EUROPEAN PATENT APPLICATION

(11) **EP 2 333 677 A1**
(43) Date of publication of application: **15.06.2011**
(21) Application number: 10190224.5
(22) Date of filing: 07.03.2008
(51) Int. Cl.: G06F 17/30, G06Q 50/00, G06Q 10/00, G06Q 30/00

(54) **System for cinema exhibition management**

(30) Priority: 09.03.2007 US 905932 P
(62) Divisional of application: 08726689.6
(71) Applicant: Datasat Digital Entertainment, Inc., Chatsworth CA 91311 (US)
(72) Inventor: Reich, Jason, Sperling, Los Angeles, CA 90068 (US); Le, Luan, Fullerton, CA 92833 (US)
(74) Representative: Viering, Jentschura & Partner

(57) **Abstract**

A cinema exhibition management (CEM) system exchanges data and communications between motion picture exhibitors and distributions without direct communication between any two users, all communications and cinema exhibition data passing through centralized data and web application servers. The central database server stores cinema exhibition data in a relational database to support execution of different user tasks for one or more CEM modules selected from film solicitation, film booking, showtimes, trailer requests and placements, box office reports and payment vouchers. A CEM application on the web application server is accessible from a plurality of remote computer terminals by distribution and exhibition users to interface with the relational database to check user permissions and assignments to filter and then display authorized cinema modules and tasks therefore, filter records from the relational database in accordance with a selected task, permissions and assignments and route the records to the user, prompt the user to perform the selected task, and change the status of records in the relational database upon completion of the task so that at least one different user can view and perform additional tasks associated with those records.

## Description

### CROSS-REFERENCE TO RELATED APPLICATIONS

This application claims benefit of priority under 35 U.S.C. 119(e) to U.S. Provisional Application No. 60/905,932 entitled "System and Method for Cinema Exhibition Management" and filed on March 9, 2007, the entire contents of which are hereby incorporated by reference.

### BACKGROUND OF THE INVENTION

### Field of the Invention

This invention relates to cinema exhibition management and more particularly to a system and method of centralized content management and communication tools for cinema exhibition management.

### Description of the Related Art

The cinema industry has undergone change over recent years. Lags have developed in getting distributors holdover and booking information. Also, data entry issues arise between what exhibitors think they have told distributors and what distributors have had in their sales systems. Cinema exhibition management encompasses a number of standard operations including solicitations from studios to play their releases, booking requests to book releases, showtime announcements by exhibitor's to their theaters, trailer requests by studios of exhibitors and box office reports sent by exhibitors to studios. The standard approach of direct communication via phone, fax, mail or email is inefficient and unreliable in the modem cinema and digital cinema markets.

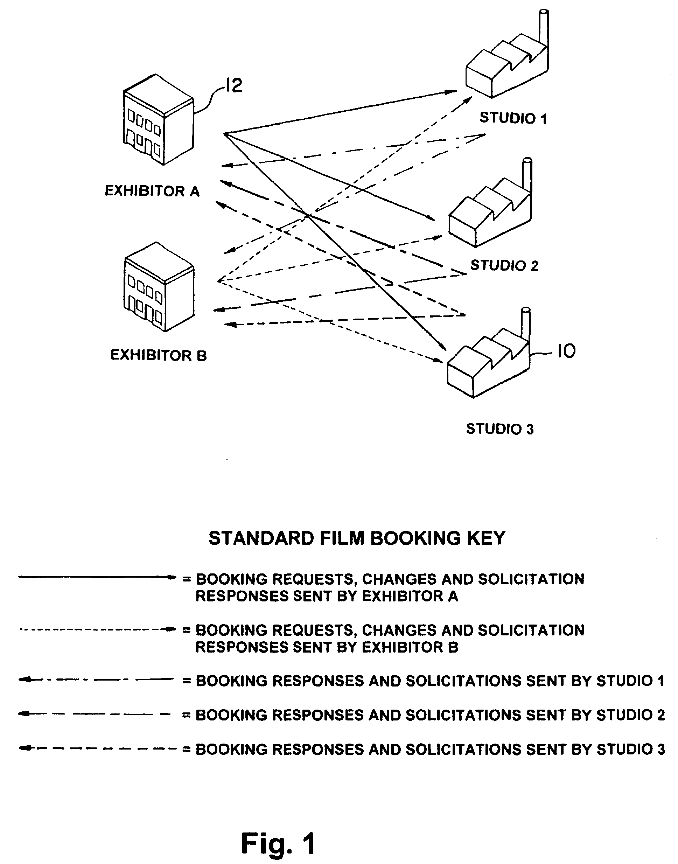

A standard film solicitation and booking interaction between studios 10 and exhibitors 12 is illustrated in Figure 1. On an ongoing basis, studios solicit exhibitors to play their releases. These solicitations are sent via phone, fax, and mail and sometimes email. Exhibitors respond to these solicitations by directly calling, faxing, mailing or emailing the corresponding studios. In addition, exhibitors request playdates (bookings) of specific releases from the studio responsible for the film. These requests are sent via phone, fax, mail and email. Studios respond to these requests by directly calling, faxing, mailing or emailing the corresponding exhibitor. Finally, exhibitors make booking changes on a weekly basis for all the films playing in their theaters. The exhibitors notify the studios responsible for these films via phone, fax, mail and email. Studios respond to the requests by directly calling, faxing, mailing or emailing the corresponding exhibitor. This is an inefficient and unreliable system for performing solicitations and bookings. The promulgation of digital content and the resulting demand for more flexibility to solicit, book, change the bookings nimbly further exacerbates the problems in this system.

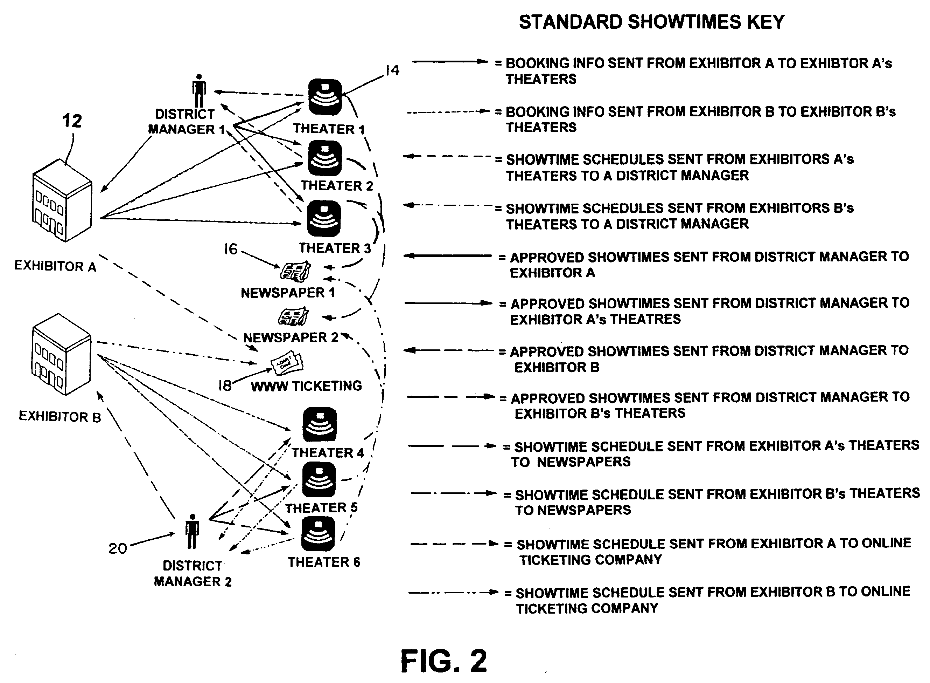

A standard approach for exhibitors **12** to announce showtimes to their theaters **14**, newspapers 16 and ticketing **18** is illustrated in Figure 2. Every week film buyers at an exhibitor's headquarters (or at a film buying service) making booking decisions and let their theaters know via phone, fax and email. This usually occurs on Monday and Tuesday. Managers at the theaters create a showtime schedule and then submit these schedules to their district managers **20** for approval. This usually occurs no later than Wednesday morning. District managers approve the schedule and notify their theaters as well as their headquarters via phone, fax and email. This must happen no later than Wednesday afternoon. Theater managers fax or email their showtime schedule to any newspaper they are placing advertising in. (Sometimes this is done by the exhibitor's headquarters). This usually must be done by Wednesday afternoon to make ad deadlines. Exhibitors send the approved showtimes via fax or email to any online ticketing company they are using. This is usually done no later than Thursday.

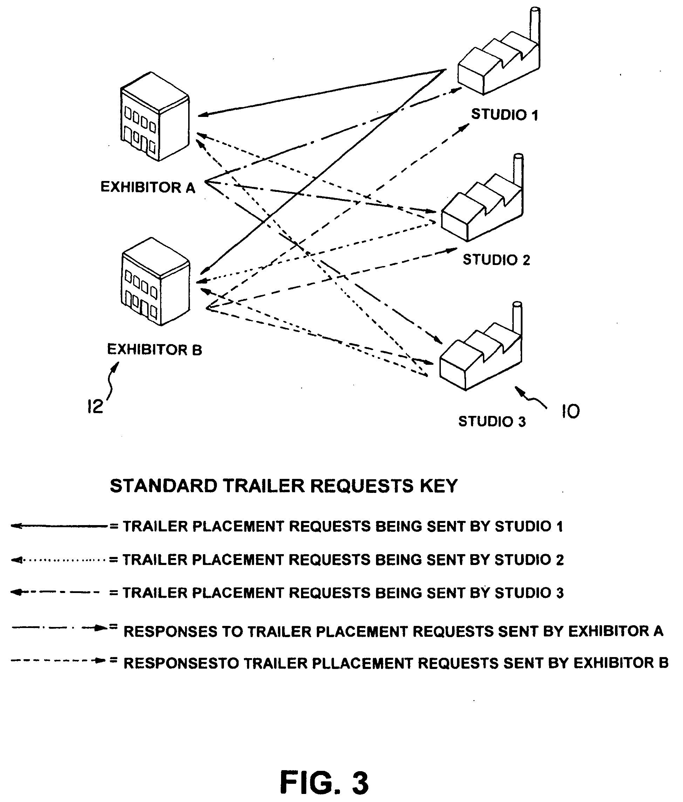

A standard trailer solicitation from studios **10** to exhibitors **12** is illustrated in Figure 3. On a regular basis, studios contact exhibitors to request that trailers (previews) for their upcoming titles get put in front of highly anticipated new releases. These requests are sent in the form of letters, emails phone calls and faxes. Usually an exhibitor will only do placement for the first week of any new release. Very often the placement of trailers is more contested than actual film bookings. If they do not ignore the request entirely, exhibitors respond to the studio's trailer placement request via phone, fax or email.

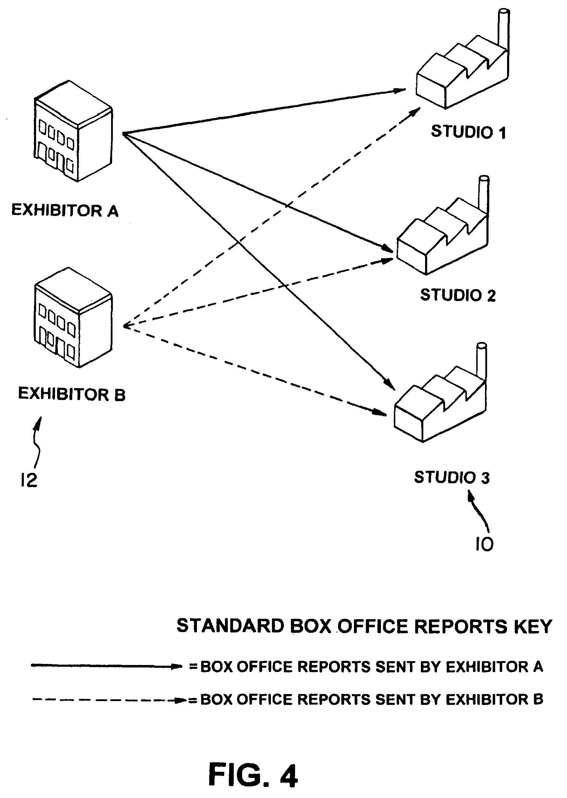

A standard box office report from exhibitors **12** to studios **10** is illustrated in Figure 4. Every week, exhibitors must send box office reports to every studio that had a film playing in their theaters two weeks prior. These reports display the audited net gross (box office gross minus any taxes) by film, by theater and by ticket type. A studio will only receive box office reports for films they release and control. Exhibitors send reports to studio via fax, mail and email.

Exhibitors send payment vouchers to every studio (distributor) for which they need to pay film rental based on the booking terms for the films played in their theaters. These reports display the audited net gross (box office gross minus any taxes) by film and by theater, as well as the term amount (usually a percentage of the net gross) and payment amount. A studio will only receive its own vouchers and not the vouchers of other studios. Exhibitors send payment vouchers to studios via fax, email and email. Some do not bother sending them at all

### SUMMARY OF THE INVENTION

The present invention provides a system and method of centralized cinema exhibition management and communication between motion picture exhibitors and distributions.

In an exemplary embodiment, a system comprises a communication network for interconnecting a central data server and relational database, a central web application server, and a plurality of user computer terminals to perform selected web-based tasks and exchange cinema exhibition and distribution data without direct communication between any two users, all communications and cinema exhibition data passing through said centralized data and web application servers.

The central database server stores cinema exhibition and distribution data in a relational database to support execution of different user tasks for one or more CEM modules. The database is organized and accessed according to the relationships between data items defmed by a plurality of member, entity, assignment, permission and information tables. Each table includes records each having a primary key that identifies the record and data associated therewith. The member table includes records of user specific identification data. The entity tables including at least film, theater and trailer tables having records associated with different film, theater and trailer entities, respectively. The assignment tables include records that map film, theater and trailer entities to users for specific modules. The permissions table includes records that authorize read or write capability to users for specific tasks within modules. The information tables include records that store cinema exhibition and distribution data associated with the performance of tasks.

A plurality of remote user computer terminals provides access to a cinema exhibition management (CEM) application on the web application server. The CEM application is configured to interface with the relational database to (a) check member tables to verify user log on, (b) check user permissions and assignment tables to provide access to (filter and then display) authorized modules from among a set comprising at least one of film solicitation, film booking, showtimes, trailer requests and placements, box office reports and payment vouchers to the user for selection of a module, (c) check user permissions and assignment tables for a selected module to filter and then display authorized tasks to the user for selection of a task (d) filter records from the information tables in the relational database in accordance with the selected task, user permissions and assignments tables and route the records to the user, (e) prompt the user to perform the selected task, (f) store any additional cinema exhibition data provided in performance of the selected in the existing or new records in the information tables in relational database on said central data storage server and (g) change the status of certain records in the relational database upon completion of the task so that at least one different user can view and perform additional tasks associated with those records.

These and other features and advantages of the invention will be apparent to those skilled in the art from the following detailed description of preferred embodiments, taken together with the accompanying drawings, in which:

### BRIEF DESCRIPTION OF THE DRAWINGS

FIG. 1, as described above, is a diagram of a standard solicitation and booking process;
FIG. 2, as described above, is a diagram of a standard showtime announcement process;
FIG. 3, as described above, is a diagram of a standard trailer request process;
FIG. 4, as described above, is a diagram of a standard box office reporting process;
FIGs. 5a-5c are diagrams of a system of centralized content management and communication tools for cinema exhibition management, a web application and a relational database;
FIG. 6 is a diagram of solicitation and booking using the centralized system in accordance with the present invention;
FIG. 7 is a flow diagram of the solicitation process illustrating the interaction of the distribution and exhibition users with the centralized system;
FIGs. 8a-81 are a sequence of web shots illustrating the user interfaces for an exemplary solicitation and booking process;
FIGs. 9a and 9b are flow and booking table diagrams of the booking process illustrating the interaction of the distribution and exhibition users with the centralized system;
FIG. 10 is a diagram of trailer requests using the centralized system in accordance with the present invention;
FIG. 11 is a flow diagram of the trailer process illustrating the interaction of the distribution and exhibition users with the centralized system;
FIG. 12 is a diagram of showtime announcements using the centralized system in accordance with the present invention;
FIG. 13 is a flow diagram of the showtime announcement process illustrating the interaction of the exhibition user with the centralized system;
FIG. 14 is a diagram of box office reports using the centralized system in accordance with the present invention;
FIG. 15 is a flow diagram of the box office reports process illustrating the interaction of the distribution and exhibition users with the centralized system; and
FIG. 16 is a flow diagram of the vouchers process.

### DETAILED DESCRIPTION OF THE INVENTION

In the following description of preferred embodiments, reference is made to the accompanying drawings which form a part hereof, and in which are shown by way of illustration specific embodiments in which the invention may be practiced. It is to be understood that other embodiments may be utilized and structural changes may be made without departing from the scope of the preferred embodiments of the present invention.

Although the following description is directed primarily toward methods and systems of communication between cinema exhibitors and distributors, embodiments of the present invention may be used in a variety of capacities and applications.

Embodiments of the present invention may be web-based content management and communication tools that allow exhibitors and distributors to communicate with one another in order to negotiate film rental terms and transmit box office reports, holdovers and vouchers. Embodiments of the present invention may also enable exhibitors to communicate within their own company. Embodiments of the present invention may be used as a theater management tool by the exhibitor.

Embodiments of the present invention may be used as an internal communication and management tool within a single exhibition chain without communicating with existing enterprise systems, point-of-sale systems or distributors. Embodiments of the present invention may also be placed on a single server and used as an enterprise solution, rather than a hosted solution. Embodiments of the present invention may relay critical business information to film companies and third parties outside the company. In addition, rather than having to outlay a large upfront cost to purchase hardware and software, embodiments of the present invention may be a hosted application service and may be "rented" on a month-to-month basis. Integrating enterprise systems, using the hosted application and communicating with third parties such as newspapers and distributors is one way to use embodiments of the present invention. Embodiments of the invention may exist as software or code on a computer-readable medium, the code when executed causing one or more processors to perform an embodiment of the invention.

By way of example and not limitation, embodiments of the present invention may take one or more of the following forms:
1. ASP - Embodiments of the present invention may be a hosted solution with monthly license fees for exhibitors and distributors. Full functionality of the system may be accessible both as an internal communication tool within an exhibition chain or as an application that makes communicating with outside companies more efficient.
2. Enterprise Solution - Embodiments of the present invention may be placed on a single server for an exhibitor to manage and administrate behind their own firewall. Full functionality of the system will be accessible both as an internal communication tool within an exhibition chain or as an application that makes communicating with outside
3. Lite Version - Users of embodiments of the present invention may be able to access the booking section of the application at a reduced monthly fee.
4. Middle Ware - Users (either exhibitors or distributors) of embodiments of the present invention may not officially log into the system but will instead transmit and receive data from their existing enterprise systems through embodiments of the present invention. This method allows exhibitors to communicate with distributors without having to give up their internal IT systems.

Embodiments of the present invention may be a web application which runs off a relational database. A relational database is a database system in which the database is organized and accessed according to the relationships between data items without the need for any consideration of physical orientation and relationship. Relationships between data items are expressed by means of tables. Embodiments of the present invention may store data in numerous tables specific to the type of data being stored. For example, all users are stored in a table dedicated to user information such as username, password, user's first and last name, address, phone number, etc.

### Cinema Exhibition Management (CEM) System: Centralized Content Management and Communication Tools

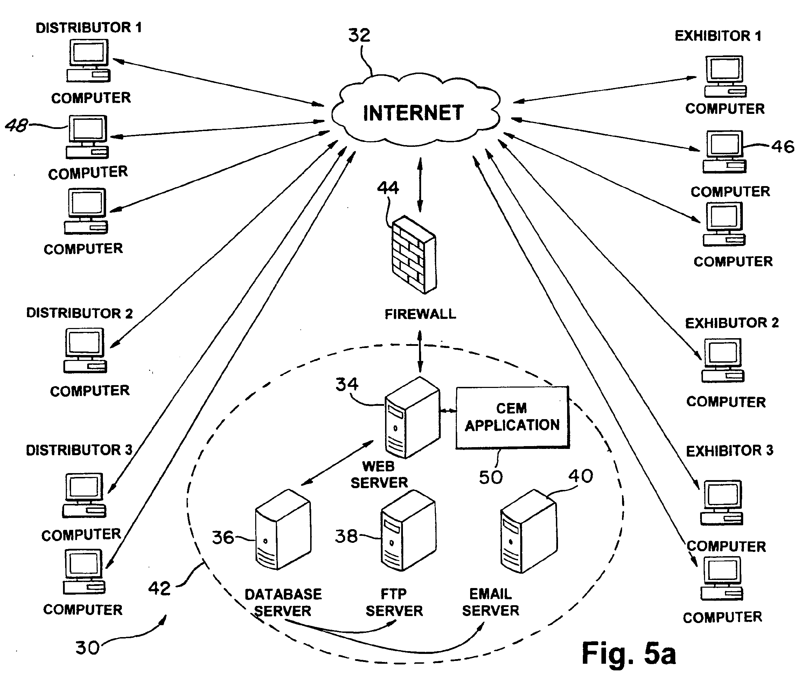

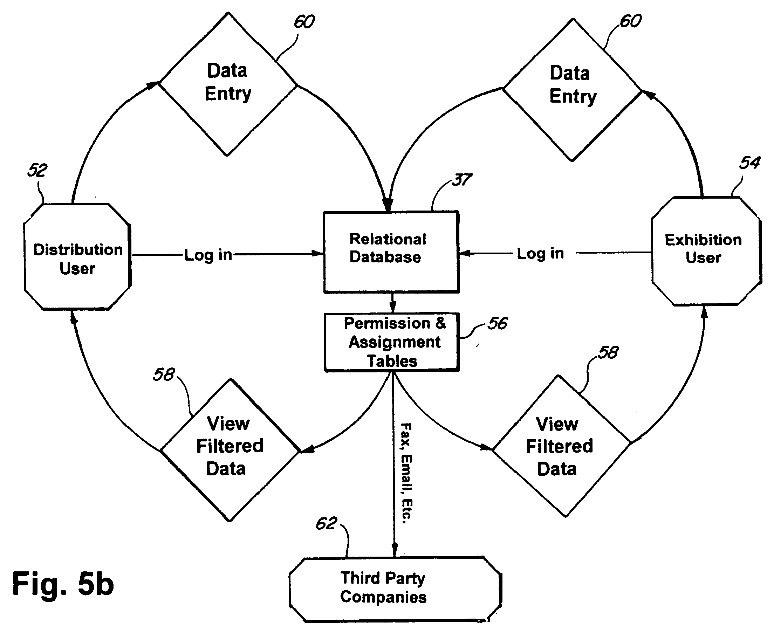

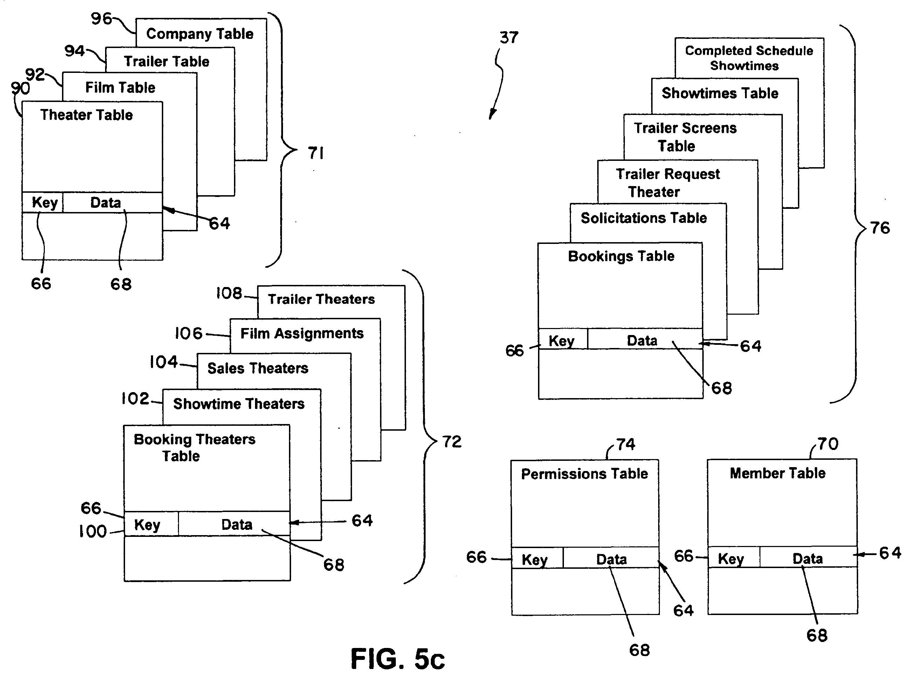

In an exemplary embodiment as illustrated in Figures 5a through 5c, a CEM system **30** comprises a communication network **32** such as the Internet for interconnecting a web application server **34**, a database server **36** including a relational database **37**, an FTP server **38** and an Email server **40** at a central hub **42** behind a firewall **44** with a plurality of Exhibition and Distribution user computer terminals **46** and **48**, respectively, to perform selected web-based tasks via a CEM application **50** on the web server and exchange cinema exhibition and distribution data without direct communication between any two users, all communications and cinema exhibition data passing through the central hub **42**. The database and web servers may operate in either a non-clustered or clustered environment in which multiple servers are connected together. The 'hub' is centralized in terms of data and communications flow between exhibition and distribution users and users within a single distributor or exhibitor but is not necessarily physically centralized in a single location. The exhibition and distribution users can use CEM web application or their own enterprise systems to enter data. But once entered, the data is stored, filtered, and routed by the centralized CEM system. The depicted CEM system is an ASP solution but may be configured as an Enterprise solution.

Central database server **36** stores cinema exhibition and distribution data in relational database **37** in records in different tables to support execution of different user tasks for one or more CEM modules selected from film solicitation, film booking, showtimes, trailer requests and placements, box office reports and payment vouchers.

CEM application **50** is accessible from the remote computer terminals **46** and **48** by distribution and exhibition users **52** and **54** to interface with the relational database 37 to log in, check user permissions, responsibilities and assignments (step **56**) to provide access to (e.g. filter and then display) authorized cinema modules and tasks therefore (step **58**), perform data entry to select modules and tasks (step **60**), filter records from the relational database in accordance with a selected task and assignments (step **56**) and route the records to the user (step **58**), prompt the user to perform the selected task (step 60), and change the status of certain records in the relational database **37** upon completion of the task so that at least one different user can view and perform additional tasks associated with those records. Certain tasks generate an outgoing request, which upon submission becomes an incoming request for a specific task for one or more different users. The CEM application and database check the permissions and assignments to direct the incoming request to only the appropriate users and to authorize those users to respond. For example, submission of a film solicitation may request a response from one or more exhibition users to all or different portions of the film solicitation. Similarly, submission of a film booking may request a response from one or more distribution users to all or different portions of the film solicitation. The performance of certain tasks also generates an output that is distributed to other users or third party companies **62** via the CEM application or via email, FTP, web service or fax. The centralized structure of the system that routes all data and communications through the central hub and the filtering capabilities of the CEM application and relational database to match tasks, requests and data to only the appropriate users are important to providing a CEM system that is efficient, reliable and scalable.

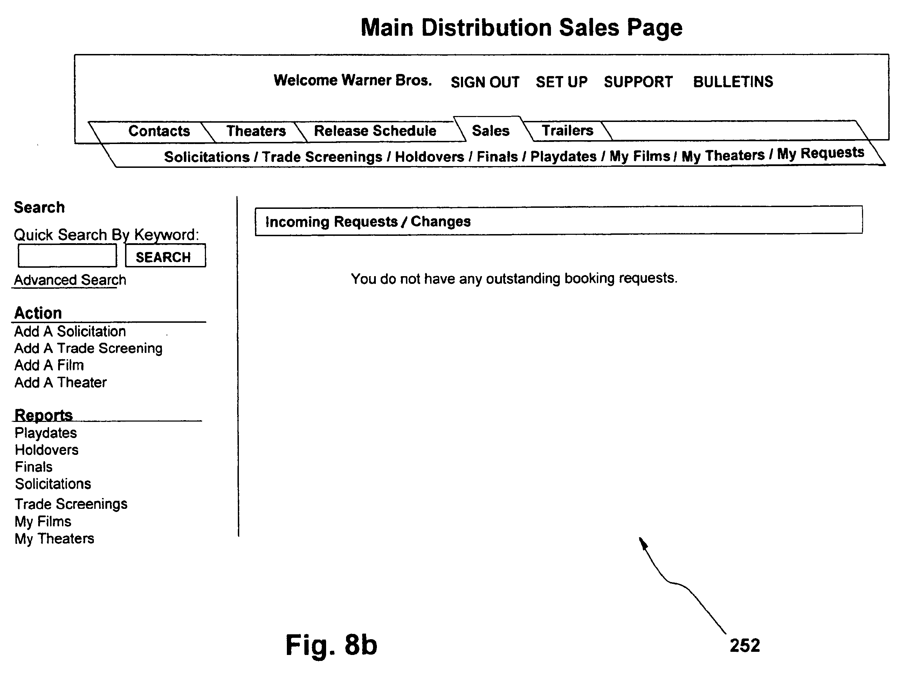

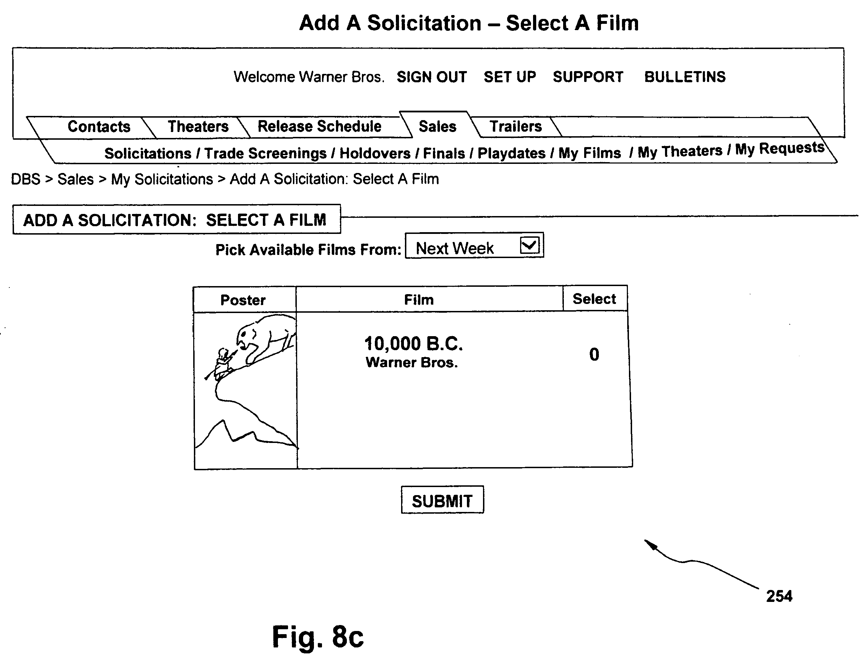

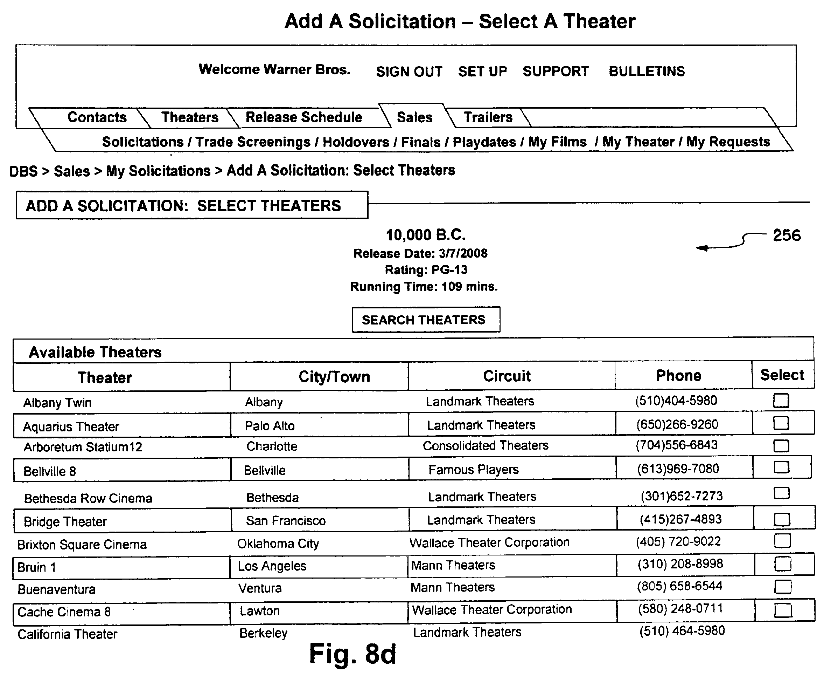

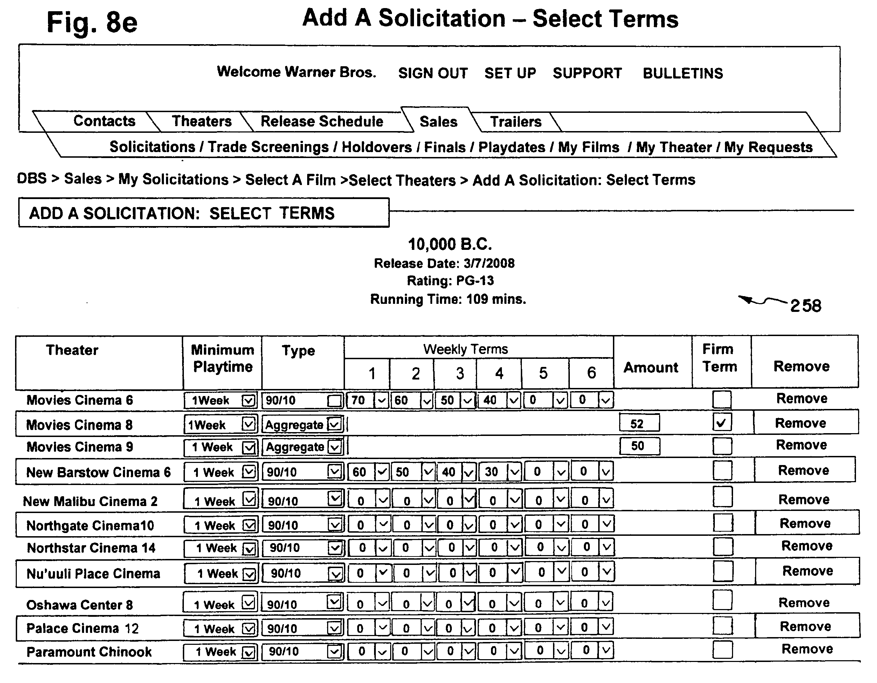

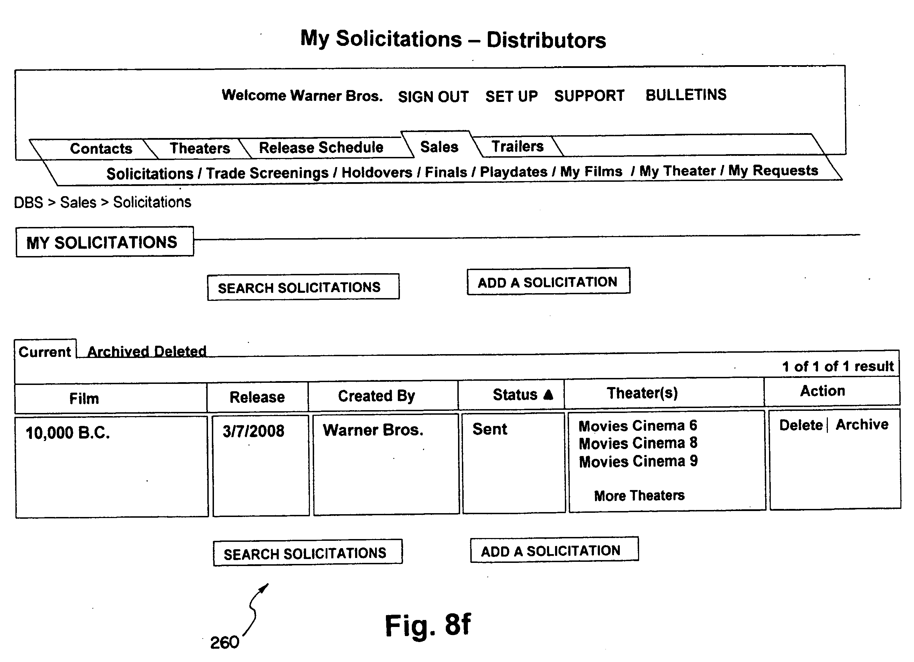

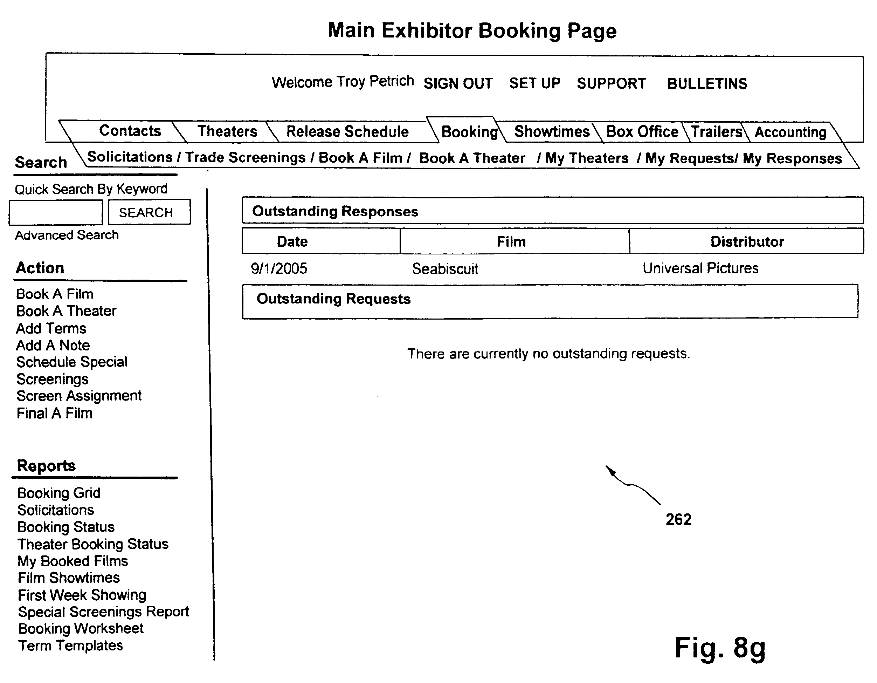

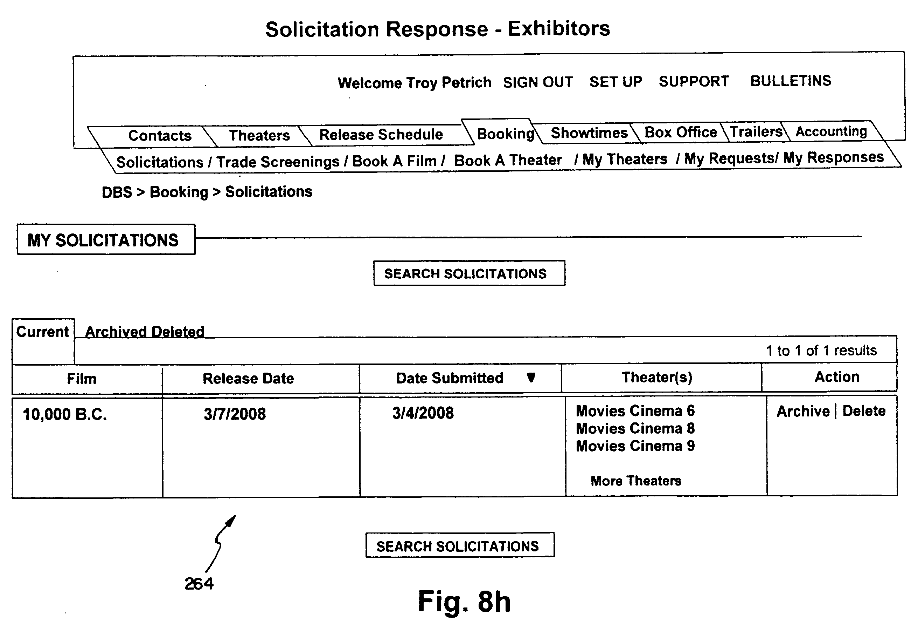

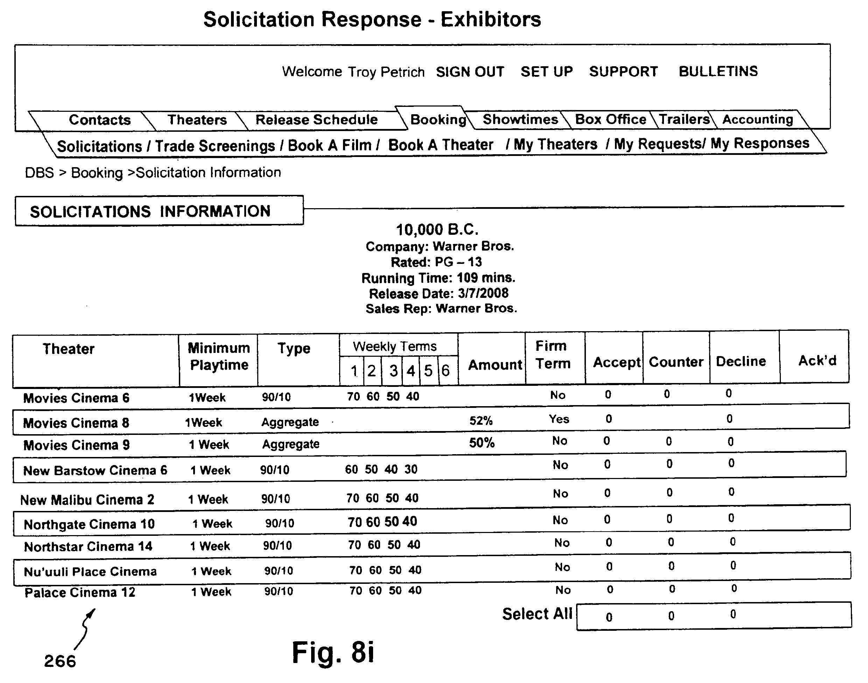

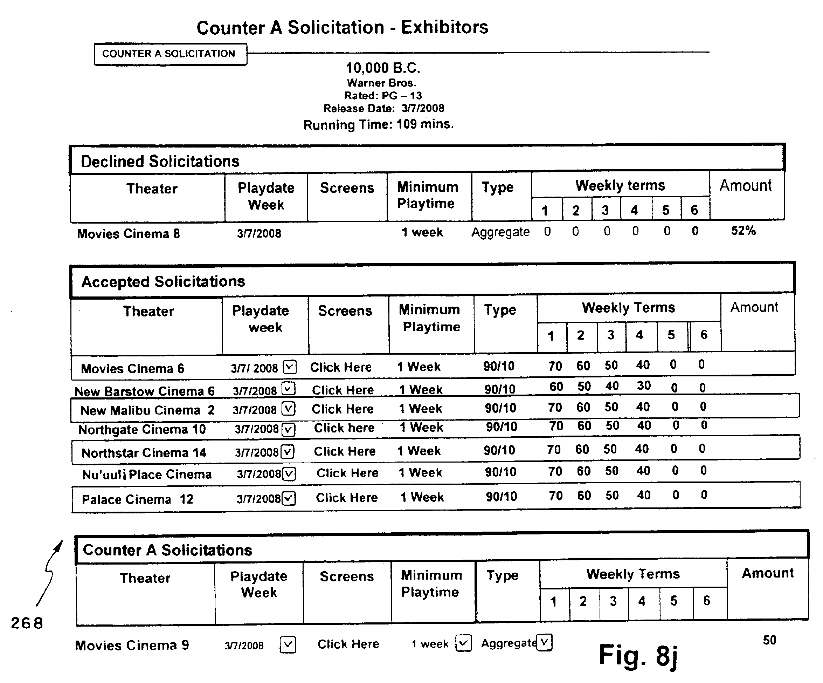

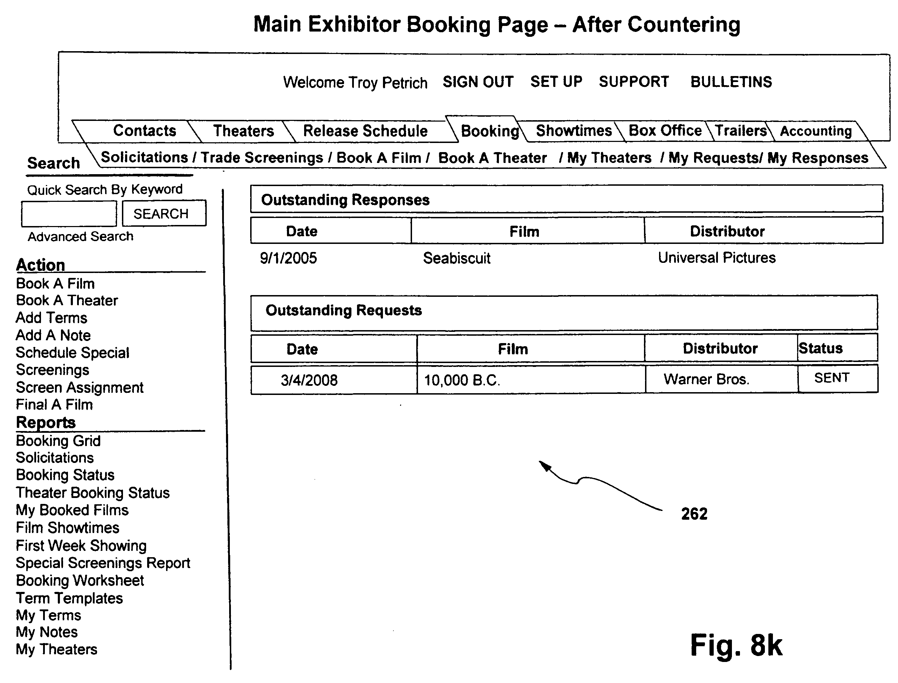

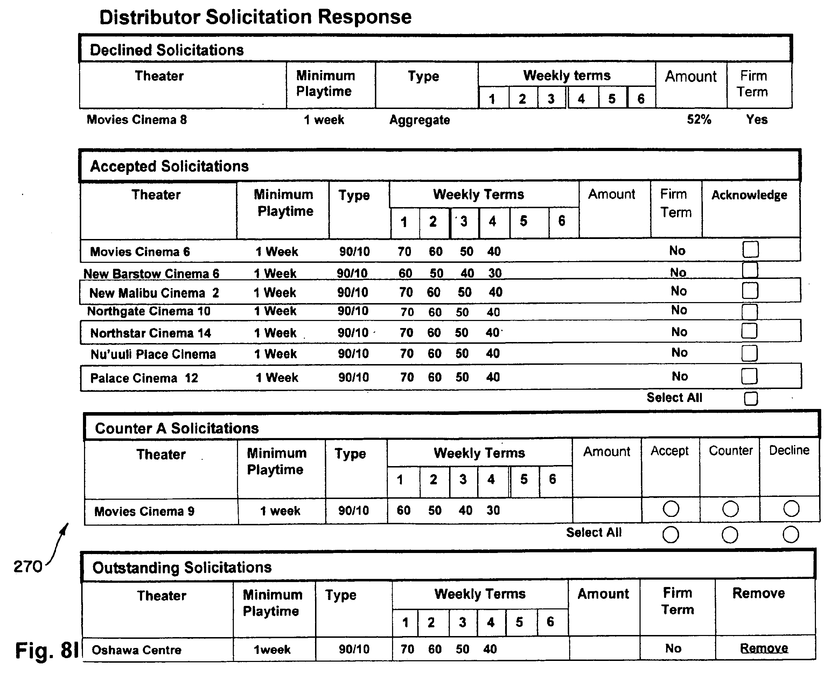

Relational database **37** is a database system in which the database is organized and accessed according to the relationships between data items without the need for any consideration of physical orientation and relationship. Relationships between data items are expressed by means of tables. Tables include records **64** with each record including a primary key **66** identifying the record and information or data **68** associated with the record. Embodiments of the present invention may store data in numerous tables specific to the type of data being stored including member tables **70** having records for user specific identification data, entity tables **71** including at least film, theater and trailer tables including records associated with different film, theater and trailer entities, respectively, assignment tables **72** including records that map film, theater and trailer entities to users for specific modules, permissions tables **74** including records that authorize read or write capability to users for specific tasks within modules, information tables **76** including records that store cinema exhibition and distribution data associated with the performance of tasks. Entity tables identify and define the core elements or building blocks of the CEM system, namely films, theaters and trailers. Assignment tables are set by the appropriate system administrators to assign entities to users for each module. Information tables are, at least in part, built by the process of selecting and performing tasks. Within each class of tables there can be dozens to hundreds of specific tables and sub-tables that express the relationships between the cinema exhibition and distribution data items. A more detailed description of key tables and the relationships is provided below. The relationships of the entity, assignments and information tables for a specific bookings example are shown in Figure 8b.

### Relational Database

### Tables

### Member Table

When a company is first entered into an embodiment of the present invention it may be given two records in the Member Table 70; the organization record and the record of the first person who signed up (member record). Both records are given unique identifying numbers, or keys, an Organization ID and a Member ID, respectively. Each new user (or member) that is added to the company may also receive a unique Member ID. In addition, when a company is entered into the database it may decide what type of company it is; distributor, exhibitor or service vendor. The record may also include username, password, first and last names, title, company email etc.

### Permissions Table

Permissions Table 74 authorizes read and/or write capability for a specific user to perform tasks within each module. The user may have read but not write capability. Each record will include a Permission ID as the primary key, an organization ID, username, task, permission, role, group, etc. Each user may be associated with many different records and the Table may include hundreds of different records for all of the users and different modules.

### Entity Tables

As used herein an 'entity' is a required element or building block of the CEM system. Entities include specific films, theaters, trailers and possibly third party companies or other elements required for different modules. Each class of entities has an associated table (e.g. Film Table) that can have hundreds of entries. Each entry is an entity and each entity has an associated record that includes a primary key to identify the identity and any data for the entity. Note, the term 'entity' is not being used in terminology commonly associated with relational databases but used to identify the core elements of a cinema exhibition management system.

### Theater Information

According to an embodiment of the present invention, for a user to enter a theater and its accompanying information (address, number of screens, phone number, etc.) into a database of an embodiment of the present invention they may be required to be a member of an organization with an Organization Type of exhibitor. They may also be required to have the proper personal permission settings (assigned by their company's booking administrator) to have Read/Write permissions in the Theaters section. According to an embodiment of the present invention, Users that are a part of an organization with an Organization Type of distributor may not enter theaters at all, no matter what their Theaters section personal or group permissions are.

When a new theater and its accompanying information are entered into the database, in the Theater Table 90, the theater may be given a unique identifying number, or key, called a Theater ID. That Theater ID may be linked to an Organization ID being used in this instance as a foreign key. In the Theater Table, each theater record lists the Organization ID as the controlling party. According to an embodiment of the present invention, a theater may only have one Theater ID and one Organization ID. In the Theater Table, multiple theaters may share the same Organization ID (and thus belong to the same company), but each Theater ID is only used once.

This Organization ID prevents a theater (and its Theater ID) from being assigned to a company with another Organization ID. This is the way embodiments of the present invention know which theaters belong to AMC and which belong to Regal, for example. Users with a specific Organization ID may not change theater information for any theater that does not have their Organization ID, no matter what their personal permissions for the Theaters section are.

### Film Information

According to an embodiment of the present invention, for a user to enter a film and its accompanying information (cast, crew, release date, running time, etc.) into the database they must be a member of an organization with an Organization Type of distributor. They must also have the proper personal permission settings (assigned by their company's booking administrator) to have Read/Write permissions in the Release Schedule section. Users that are a part of an organization with an Organization Type of exhibitor may not enter films at all, no matter what their Release Schedule section personal permissions are.

According to an embodiment of the present invention, when a new film and its accompanying information are entered in the database, in the Film Table 92, the film is given a unique identifying number, or key, called a Project ID. That Project ID is linked to an Organization ID being used in this instance as a foreign key. In the Film Table, each film record lists the Organization ID as the controlling party. A film can only have one Project ID and one Organization ID. In the Film Table, multiple films may share the same Organization ID (and thus belong to the same company), but each Project ID is only used once.

This Organization ID prevents a film (and its Film ID) from being assigned to a company with another Organization ID. This is the way embodiments of the present invention know which films belong to Sony Pictures Entertainment and which belong to Warner Bros., for example. According to an embodiment of the present invention, users with a specific Organization ID may not change theater information for any theater that does not have their Organization ID, no matter what their personal permissions for the Release Schedule and Films sections are.

### Trailer Information

According to an embodiment of the present invention, for a user to enter a trailer and its accompanying information (running time, version, sound, etc.) into a database designed according to an embodiment of the present invention, they can be a member of an organization with an Organization Type of either exhibitor or distributor. They must also have the proper personal permission settings (assigned by their company's booking administrator) to have Read/Write permissions in the Trailers section.

When a new trailer and its accompanying information, are entered in the database, in the Trailer Table **94**, the film is given a unique identifying number, or key, called a Trailer ID. That Trailer ID is linked to both a Member ID (for the organization that created it) as well as the Film ID (of the movie it is being created for), being used in this instance as foreign keys. In the Trailer Table, multiple trailers may share the same Member ID (and thus belong to the same company).

While both exhibitors and distributors can enter a trailer and its accompanying information, an exhibitor is able to enter different types of trailers, such as In-House Policy Trailers, Advertisements and Traditional Film Trailers, for example. In the instance where a trailer is not associated with a specific film a Trailer ID is still created however the Film ID is not included in the record.

According to an embodiment of the present invention, a distributor's users can only create trailers for films that have their Organization ID. A distributor can send a trailer placement requests to more than one exhibitor at a time.

### Third-Party Company Information

According to an embodiment of the present invention, companies that are neither exhibitors nor distributors can be entered into the database so that specific information can be sent to them in an automated fashion. These companies are referred to as "third-party companies" and include box office reporting agencies, newspapers and Internet ticketing websites.

According to an embodiment of the present invention, when a new company and its accompanying information (contact name, address, city, state, phone, fax, email, etc.) are entered in the database, in the Companies Table 96, the company is given a unique identifying number, or key, called a Company ID. That Company ID is not linked to an Organization ID. In the Companies Table, each Company ID is used only once. Every Company ID also stores a method of transmission for every company. A company may receive showtimes by email, fax or XML.

### Assignment Tables

In order to route booking and showtime information to the correct user at the appropriate organization, embodiments of the present invention assign theater and film ('entity') responsibilities to specific users for a multitude of tasks such as booking, scheduling showtimes, trailer placement, etc. Companies with an Organization Type of exhibitor can only assign theater responsibilities to their users, whereas companies with an Organization Type of distributor can assign both theater and film responsibilities to their users. By creating such routing maps, embodiment of the present invention are able to centralize all the booking, showtime, trailer placement, etc. information and store it in one large relational database that allows users only to see the information for theaters or films which have been assigned to them or for which they have permission (through the use of public groups) to view.

### Theater Booking Assignments

According to an embodiment of the present invention, an organization's users are assigned to perform specific tasks for a given theater. One of these tasks is booking, or the programming of films into a theater for a given calendar week. A user might be assigned to perform a specific task such as booking for more than one theater. As well, a user might be allowed to perform a special task for theaters that are not assigned to them if they are in a public group (within their organization) and the sharing rules for that group permit the user to Read/Write bookings for theaters assigned to other members of the group. To illustrate an embodiment of the present invention, we will stick with tasks and theaters assigned directly to a user and we will assume their personal permissions (permissions tables 74) for booking tasks are set to Read/Write.

According to an embodiment of the present invention, for a user to be given booking responsibilities for a theater they must be a member of an organization with an Organization Type of exhibitor and the theater must belong to that organization (per the Organization ID). They must also have the proper personal permission settings (assigned by their organization's booking administrator) to have Read/Write permissions for Booking Requests, Booking Responses and Outstanding Requests all inside the Booking section of the application. (It is possible for a user to have permissions for only one of these three tasks.)

When a user is assigned to book a theater (by their company's booking administrator) a record is created in the BookingTheaters Table 100 and assigned a BookingTheater ID, being used in this instance as a primary key. Added to this record are the user's Member ID and the theater's Theater ID, which are now being employed as foreign keys within the BookingTheaters Table. For every theater a user is assigned to book, another BookingTheater ID is created. In the BookingTheaters Table, multiple BookingTheater ID's may share the same Member ID (and thus be booking assignments for the same user), but each Theater ID is only used once. In other words, a theater can only be assigned to one user for booking.

This BookingTheater ID is the way embodiments of the present invention know which theaters are assigned to specific user for booking. The BookingTheater ID is then used in the Profiles Table as a foreign key so that permissions can be managed by an administrator.

### Theater Showtime Assignments

According to an embodiment of the present invention, an organization's users are assigned to perform specific tasks for a given theater. One of these tasks is showtimes, or the scheduling of when movies will play in a theater on a given date. A user might be assigned to perform a specific task such as showtimes for more than one theater. As well, a user might be allowed to perform a special task for theaters that are not assigned to them if they are in a public group (within their organization) and the sharing rules for that group permit the user to Read/Write showtimes for theaters assigned to other members of the group. To illustrate an embodiment of the present invention, we will stick with tasks and theaters assigned directly to a user and we will assume their personal permissions for showtimes tasks are set to Read/Write.

According to an embodiment of the present invention, for a user to be given showtime responsibilities for a theater they must be a member of an organization with an Organization Type of exhibitor and the theater must belong to that organization (per the Organization ID). They must also have the proper personal permission settings (assigned by their organization's booking administrator) to have Read/Write permissions for Showtimes, Special Screenings and Showtime Approval all inside the Showtimes section of the application. (It is possible for a user to have permissions for only one of these three tasks.)

When a user is assigned to schedule showtimes for a theater (by their company's booking administrator) a record is created in the ShowtimeTheaters Table 102 and assigned a ShowtimeTheater ID, being used in this instance as a primary key. Added to this record are the user's Member ID and the theater's Theater ID, which are now being employed as foreign keys within the ShowtimeTheaters Table. For every theater a user is assigned to schedule showtimes for, another ShowtimeTheater ID is created. In the ShowtimeTheaters Table, multiple ShowtimeTheater ID's may share the same Member ID (and thus be showtime assignments for the same user), but each Theater ID is only used once. In other words, a theater can only be assigned to one user for showtimes. This ShowtimeTheater ID is the way embodiments of the present invention know which theaters are assigned to a specific user for showtimes. The Show-timeTheater ID is then used in the Profiles Table as a foreign key so that permissions can be managed by an administrator.

### Theater Sales Assignments

In embodiments of the present invention, an organization's users are assigned to perform specific tasks for a given theater. One of these tasks is sales, or the selling of a film to an exhibitor to play in a specific theater for a given calendar week. A user might be assigned to perform a specific task such as sales for more than one theater. As well, a user might be allowed to perform a special task for theaters that are not assigned to them if they are in a public group (within their organization) and the sharing rules for that group permit the user to Read/Write sales for theaters and films assigned to other members of the group. For the purposes of this explanation we will stick with tasks and theaters assigned directly to a user and we will assume their personal permissions for sales tasks are set to Read/Write.

According to an embodiment of the present invention, for a user to be given sales responsibilities for a theater they must be a member of an organization with an Organization Type of distributor and also be assigned at least one film (see Film Assignments) belonging to that distributor. In addition, they must have the proper personal permission settings (assigned by their organization's booking administrator) to have Read/Write permissions for Solicitations, Incoming Requests, Playdates/Holdovers and Finals all inside the Sales section of the application. (It is possible for a user to have permissions for only one of these four tasks.)

When a user is assigned to sell to a theater (by their company's booking administrator) a record is created in the SalesTheater Table 104 and assigned a SalesTheater ID, being used in this instance as a primary key. Added to this record are the user's Member ID and the theater's Theater ID, which are now being employed as foreign keys within the SalesTheaters Table. For every theater a user is assigned to sell to, another SalesTheater ID is created. In the SalesTheaters Table, multiple SalesTheater ID's may share the same Member ID (and thus be sales assignments for the same user), but each Theater ID is only used once. In other words, a theater can only be assigned to one user for sales. This SalesTheater ID is the way embodiments of the present invention know which theaters are assigned to a specific user for sales. The SalesTheater ID is then used in the Profiles Table as a foreign key so that permissions can be managed by an administrator.

### Film Assignments

In embodiments of the present invention a distributor's users can be assigned to sell specific films. The film must belong to that distributor (by way of the Organization ID associated with it). A user who is assigned a film to sell must also have sales assignments for at least one theater. Without having a theater assigned to them, a user will not be able to book films or solicit playdates with an exhibitor. A user might be assigned more than one film. Unlike with theater assignments, a film may be assigned to more than one user within the organization. For the purposes of this explanation we will be taking for granted that a user has been assigned both a film to sell and a theater to sell and we will assume their personal permissions for sales tasks are set to Read/Write.

When a user is assigned to sell a specific film to a given theater (by their company's booking administrator) a record is created in the FilmAssignments Table 106 and assigned a FilmAssignment ID, being used in this instance as a primary key. Added to this record are the user's Member ID and the film's Project ID which are now being employed as foreign keys within the FilmAssignments Table. For every film assigned to a user another FilmAssignment ID is created. In the FilmAssignments Table, multiple FilmAssignment IDs may share the same Project ID with different Member IDs. In other words, a film can be assigned to more than one user for sales. This FilmAssignment ID is the way embodiments of the present invention know which films are assigned to a specific user for sales. The FilmAssignment ID is then used in the Profiles Table as a foreign key so that permissions can be managed by an administrator.

### Trailer Placement Assignments

In embodiments of the present invention, an exhibitor's users are assigned to perform specific tasks for a given theater. One of these tasks is trailer placement, or the programming of trailers and advertising for a specific film and theater during a given playdate week. A user might be assigned to perform a specific task such as trailer placement for more than one theater. As well, a user might be allowed to perform a special task for theaters that are not assigned to them if they are in a public group (within their organization) and the sharing rules for that group permit the user to Read/Write trailer placement for theaters assigned to other members of the group. For the purposes of this explanation we will stick with tasks and theaters assigned directly to a user and we will assume their personal permissions for trailer placement tasks are set to Read/Write.

According to an embodiment of the present invention, for a user to be given trailer placement responsibilities for a theater they must be a member of an organization with an Organization Type of exhibitor. In addition, they must have the proper personal permission settings (assigned by their organization's booking administrator) to have Read/Write permissions for Trailers.

When a user is assigned to do trailer placement for a theater (by their company's booking administrator) a record is created in the TrailerTheater Table 108 and assigned a TrailerTheater ID, being used in this instance as a primary key. Added to this record are the user's Member ID and the theater's Theater ID, which are now being employed as foreign keys within the TrailerTheaters Table. For every theater a user is assigned to do trailer placement for, another TrailerTheater ID is created. In the TrailerTheater Table, multiple TrailerTheater ID's may share the same Member ID (and thus be trailer placement assignments for the same user), but each Theater ID is only used once. In other words, a theater can only be assigned to one user for trailer placement. This TrailerTheater ID is the way embodiments of the present invention know which theaters are assigned to a specific user for trailer placement. The TrailerTheater ID is then used in the Profiles Table as a foreign key so that permissions can be managed by an administrator.

For organizations with an Organization Type of distributor, users do not have to be assigned to a specific theater for trailer placement. Instead, to be allowed to make trailer placement requests, a user's personal permission settings (assigned by their organization's booking administrator) needs to be set to Read/Write for Trailer Placement.

### Showtime Publishers

In order to route approved showtime information to the correct user at a third-party company, embodiments of the present invention create distribution lists for each theater. Administrators at companies with an Organization Type of exhibitor can only create distribution lists for their own theaters. Only those users within an organization that have permission to approve showtimes can distribute them to third-party companies.

### Showtime Distribution Lists

In embodiments of the present invention, an exhibitor can create distribution lists for their theaters by assigning specific third-party companies (publishers) to each theater. A third-party company might be assigned to more than one theater. When a distribution list is created for a theater (by an exhibitor's booking administrator) a record is created in a CompanyTheaters Table 428 and assigned a CompanyTheater ID, being used in this instance as a primary key. Added to this record is the Theater ID of the theater and the Company ID of the third-party company, which are now being employed as foreign keys within the CompanyTheaters Table. For every third-party company assigned to a theater's distribution list another CompanyTheater ID is created. If multiple CompanyTheater ID's share the same Theater ID in the Company Theaters Table, then the Company ID's must all be different. In other words, a third-party company can only be included in a theater's distribution list once. This CompanyTheater ID is the way embodiments of the present invention know which third-party companies receive a specific theater's showtimes, and how the showtimes are to be transmitted.

### Booking Information Routing

With routing maps set up to guide booking information between specific users at an exhibitor and specific users at a distributor embodiments of the present invention can facilitate online film rental negotiation and booking requests.

### Information Tables

Information tables 76 include records that store cinema exhibition and distribution data associated with the performance of tasks. These tables or selected records therein provide the data required to perform tasks and form the 'output' that is distributed to users or third party companies e.g. the solicitation sent to exhibition users, the booking request sent to distribution users, the showtimes table sent to newspapers and ticketing agents etc. Embodiments may include bookings, solicitations, trailer request theater, trailer screens, showtimes and completed schedule tables. Other tables and sub-tables will likely exist to support these key tables. Details of these tables will be described in the context of performed tasks below.

### Cinema Modules and Tasks

The CEM application and relational database support execution of different user tasks for one or more CEM modules selected from film solicitation, film booking, showtimes, trailer requests and placements, box office reports and payment vouchers. The "keys" for the arrows indicating the flow of communications and data are the same as those presented in the background. However, all communications and data flow through the CEM system 30 in central hub 42 with no direct communication between users.

### Film Solicitation & Booking

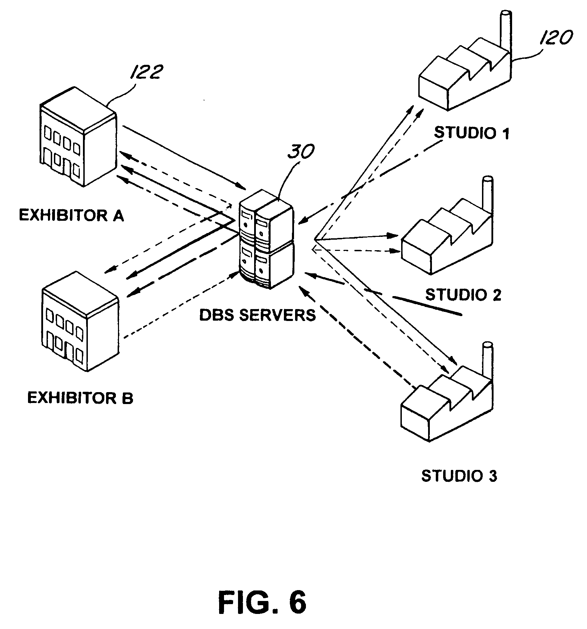

As shown in Figure 6, studios 120 solicit exhibitors 122 to play their releases. These solicitations are entered in to their own enterprise systems and sent through the CEM system 30, or entered directly into the CEM system. Once in the CEM system the solicitations are distributed to the appropriate exhibitor that accesses them either through the CEM system or their own enterprise system. Exhibitors respond to these solicitations directly through the CEM system or via their own enterprise system. Exhibitors request playdates (bookings) of specific releases from the studio responsible for the film. These requests are entered into the exhibitor's existing enterprise system or directly into the CEM system. Once in the CEM system the requests are distributed to the appropriate studio that accesses them either through the CEM system or their own enterprise system. Studios respond to these requests directly through the CEM system or via their own enterprise system. Exhibitors make booking changes on a weekly basis and notify the studios responsible for these films. These booking changers are entered into the exhibitor's existing enterprise system or directly into the CEM system. Once in the CEM system the changes are distributed to the appropriate studio that accesses them either through the CEM system or their own enterprise system. Studios can respond to these requests directly through the CEM system or via their own enterprise system.

### Solicitations

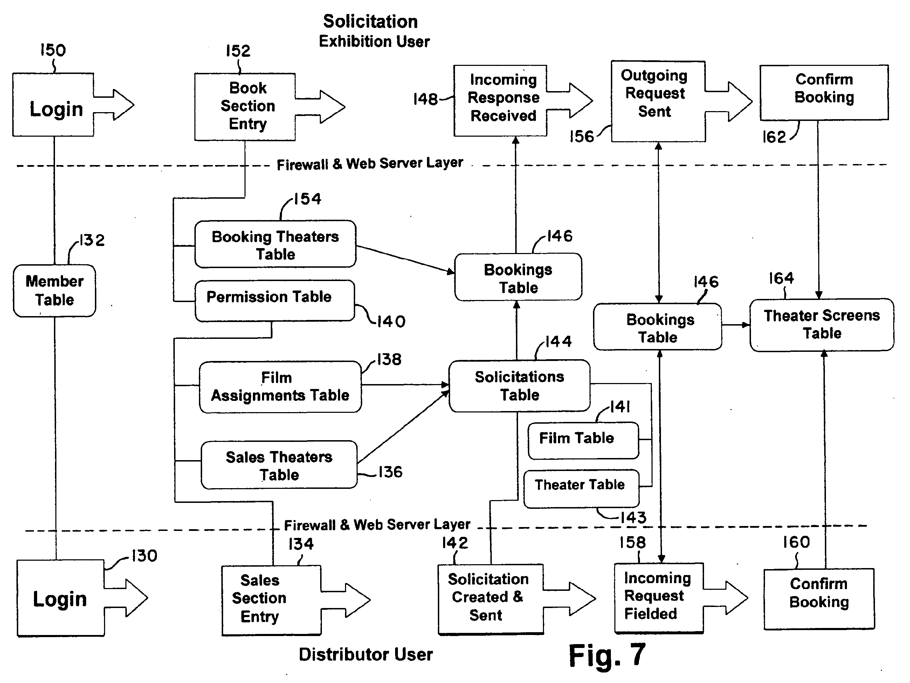

As shown in Figure 7, when a distribution user logs in (step 130) to embodiments of the present invention with a unique username and password the system identifies them through the use of their Member ID and member table 132. This Member ID has personal permissions assigned to it by their company's booking administrator. The ability to view or edit solicitations can be modified. These permissions only pertain to the theaters and films that are assigned directly to a specific user in the SalesTheaters Table and FilmAssignments Table; meaning their Member ID is associated with a given Theater ID and assigned a SalesTheater ID and is associated with a given Film ID and assigned a FilmAssignment ID.

When the user clicks into the Sales section (step **134**) of embodiments of the present invention, (which is only viewable to users with an Organization ID assigned to a Distributor) the SalesTheaters Table 136 is checked to see which Theater ID's are assigned to their Member ID. In addition, the FilmAssignments Table **138** is reviewed to see which Film ID's are assigned to their Member ID. Finally, their personal (as well as group) permissions in Permissions table **140** are reviewed to verify if the user is allowed to view or edit incoming requests for theaters and films which they have been assigned. For the purposes of this explanation we will assume that a user's permissions for incoming booking requests are set to Read/Write and they have at least one theater and one film assigned to them.

To submit a solicitation request to an exhibitor (step **142**), the user would first search for and select the film they wish to send a solicitation for. A record is created in the Solicitations Table **144** and assigned a Solicitation ID, being used in this instance as a primary key. Added to this record is the Film ID from film table **141** of the selected movie.

At the same time a record is created in the Bookings Table **146** and assigned a Booking ID, being used in this instance as a primary key. Added to this record is the Film ID of the selected movie as well as the Solicitation ID. The distribution user can then select a theater, or theaters, from a list of those they are assigned. For every theater that is selected another record is created in the Bookings Table with a separate Booking ID. In other words, each Booking ID can have only one Film ID and one Theater ID from theater table **143** associated with it. Therefore, if a user wants to send a solicitation for a given film to three different theaters than three separate Booking ID's need to be created in the Bookings Table. Several Booking IDs can have the same Solicitation ID.

For each theater selected for a given solicitation, the user can also enter numerous variables such as Screen Number, Number of Prints, Playdate Week, Minimum Playtime, and Rental Terms. Upon submission of the solicitation by the distribution user, the Bookings Table automatically captures for every Booking ID the Member ID that created the solicitation (request), as well as the date the solicitation (request) was made and the status of the request. This last field is quite important, for it is the status ot the Booking ID and the Solicitation ID which determines whether it is an outstanding solicitation (incoming response for exhibitors) being sent by a distributor.

The moment the solicitation is submitted the status reflected makes it an incoming response for an exhibitor (step **148**). Any of that exhibitor's users with permission to view or edit incoming responses for the theaters in a given solicitation (through group permissions) can see or change the response in the booking section. This also means that in the Bookings Table there may be consecutive Booking ID's for separate solicitations made by completely different distributors. An exhibitor's users will only see their own Booking ID's thanks to the Member ID's associated with the Theater ID's in the solicitation (incoming response).

When the solicitation is first submitted, it is first viewable as an incoming response by the exhibitor whose Organization ID is tied to the Theater ID in the Booking ID. However, not just any of the exhibitor's users can view the incoming request. When an exhibitor's user logs in (step **150**) to embodiments of the present invention with a unique username and password, the system identifies them through the use of their Member ID. This Member ID has personal permissions assigned to it by their company' booking administrator. The ability to view or edit booking terms, booking requests, booking responses and outstanding requests can be modified. These permissions only pertain to the theaters that are assigned directly to a specific user in the BookingTheaters Table; meaning their Member ID is associated with a given Theater ID and assigned a BookingTheater ID.

When the user clicks into the Booking section (step **152**) of embodiments of the present invention, (which is only viewable to users with an Organization ID assigned to an Exhibitor) the BookingTheaters Table **154** is checked to see which Theater ID's are assigned to their Member ID. In addition, their personal (as well as group) permissions are reviewed to verify if the user is allowed to view or edit specific booking information for theaters which they have been assigned. For the purposes of this explanation we will assume that a user's permissions for booking terms, booking requests, booking responses and outstanding requests are set to Read/Write and they have one at least one theater assigned to them.

An exhibitor's film buyers may only see and respond to solicitations (incoming responses step **148)** for theaters to which they are assigned for incoming responses. For an exhibition user to view a solicitation (incoming request), they must be assigned to the Theater ID for which the solicitation is being made. It should be noted that an exhibition user may not be viewing the entire solicitation. Because a solicitation is actually made up of multiple Booking IDs, there may be Booking IDs with Theater IDs assigned to more than one of the exhibitor's users. In other words, one solicitation can be routed in portions to multiple film buyers working for the same exhibitor. Unless, these users have permission to view solicitations (incoming response) for Theater ID's not specifically assigned to them (through group permissions) they will never see the complete solicitation.

This also means that when an exhibitor's film buyers respond to a solicitation (step 156) (either accepting the film rental terms, declining them or countering them), they may not be responding to all of the Booking ID's that make up a solicitation (incoming response). For instance, a solicitation with ten Booking ID's is being booked into ten different theaters with ten different Theater ID's. An exhibition user that only has five of these Theater ID's assigned to their Member ID in the BookingTheaters Table will only respond to five of the Booking ID's that make up the solicitation (incoming response). If the user counters the status of those Booking ID's will be changed from incoming request to outgoing request and will appear as such to the exhibitor and the distributor.

Taking this example further, the distribution user would view the incoming response, but only see the response for the five theaters (five Booking ID's) that the exhibitor responded to. The five additional theaters would still be considered incoming responses by the exhibitor and outstanding solicitations by the distributor. (A solicitation with specific Booking ID's can be viewed at the same time by both an exhibition and distribution user with the proper theater and film assignments. The exhibition user will view the request as an incoming response or outgoing request and the distribution user will view the solicitation as an outstanding request.)

If the exhibition user has countered the film terms entered by the distribution user than it will be noted in each Booking ID in the Bookings Table 146. The distribution user can field the incoming request (step 158) and counter the exhibition user's response, changing the status from outstanding request, back to incoming response. This back and fourth negotiation can continue as many times as necessary until the booking is confirmed by both parties (steps **160** and **162**), or until the first day of the requested playdate week at which point the solicitation (incoming response or outstanding request) is nulled so that neither an exhibition nor a distribution user can view or respond to it.

The moment that both parties accept and acknowledge a solicitation (as either an incoming request or outstanding request) a record is created in the TheaterSereens Table **164** and assigned a TheaterScreen ID, being used in this instance as a primary key. Added to this record is the Film ID, Theater ID, Playdate Week, Screen Number, Status (as a booked film), Booking ID, Term Week, Week Number, Start Date, End Date and a number of other variables. For every Booking ID in a solicitation (incoming response or outstanding request) that is accepted and acknowledged another record is created in the TheaterScreens Table with a separate TheaterScreen ID. In other words, each TheaterScreen ID can have only one Film ID and one Theater ID associated with it. Therefore, if an exhibition user accepts the terms presented by a distribution user for a film in three theaters and the distribution user acknowledges the acceptance, than three separate TheaterScreen ID's need to be created in the TheaterScreens Table.

Not every Booking ID in a given solicitation needs to be responded to, countered, accepted or declined. Accepting, countering and declining partial solicitations is permitted by both an exhibition user and a distribution user. If an exhibition user declines a solicitation (or a part of a solicitation) and then goes on to try and book the same film at a later date, the terms from the solicitation will be supplied to the exhibition user as they are stored with the Solicitation ID.

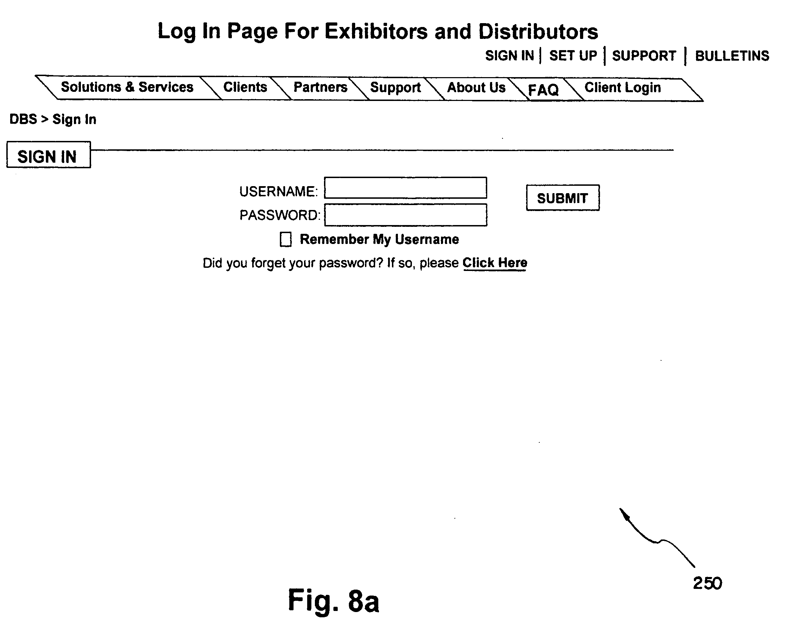

Figures 8a through 8b are a sequence of web shots that illustrate the interfaces that are displayed to the exhibition and distribution users at key steps in the solicit films task. To solicit a film, a distribution user enters his or her username and password to log in to a log in page **250**. The CEM application identifies the user as a distribution user with assignments and permissions to sell films and displays the main distribution sales page **252**. The user selects "add a solicitation: select a film" and the CEM application displays a "select a films" page **254**. The user selects the film and submits the film request. The user then selects "add a solicitation: select theaters" and the CEM application displays an 'available theaters" page **256** that lists all of the available theaters, locations, exhibitor and contact info. The user selects a number of theaters and submits the theaters request. The user then selects "add a solicitation: select terms" and the CEM application displays a "select terms" page **258** for the select theaters and film. The user enters the terms for each theater for the selected film and submits the terms requests. The film, theaters and terms are combined to form an outgoing request. Once the outgoing request is submitted, the solicitation appears on the distribution user's "my solicitations" page **260**. This shows the film, release date, studio, theaters solicited and status. When an exhibition user logs in, the CEM application identifies the user as an exhibition user with assignments and permissions to book films for specific theaters. The CEM application displays a main exhibitor booking page **262** that shows the exhibition user has made one outstanding response to book a film but has no outstanding requests. The user clicks on solicitations and the CEM application displays a "my solicitations" page **264** listing the films and the solicited theaters for which this exhibition user is assigned to book. Other theaters in the solicitation may be directed to other exhibition users. The user clicks "solicitation information" and the CEM application displays the offered terms for the film for the appropriate theaters in a "solicitations response" page 266. The user either accepts, counters or declines the offer for each theater causing the CEM application to produce a "counter a solicitation" page **268** that separates the solicitations. Upon submission the counter becomes an outgoing request that is stored in the database and made available to the distribution user. The request then appears as an outstanding request on the main exhibitor booking page. If the distribution user accesses his or solicitations the outgoing request will appear as an incoming response on a "distributor solicitation response" page **270**. The distributor can accept, decline or counter. This process continues until finalized or the solicitation expires. Once "booked" the status changes allowing other exhibition user to perform other tasks such as announce showtimes for this film.

### Booking Requests

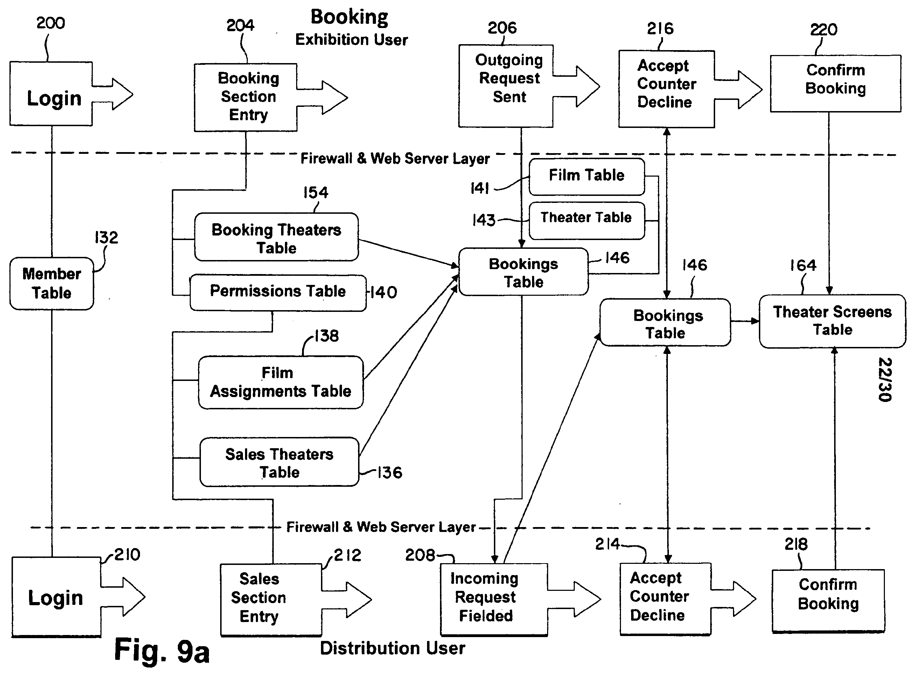

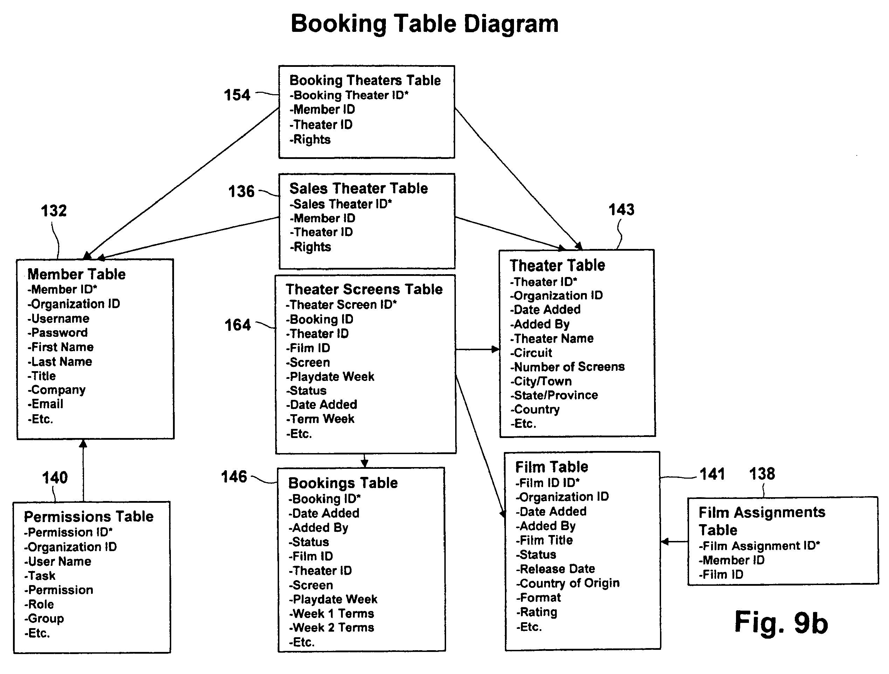

As shown in Figures 9a and 9b, when an exhibition user logs in (step **200**) to embodiments of the present invention with a unique username and password the system identifies them through the use of their Member ID and Member table **132**. This Member ID has personal permissions assigned to it by their company's booking administrator. The ability to view or edit booking terms, booking requests, booking responses and outstanding requests can be modified. These permissions only pertain to the theaters that are assigned directly to a specific user in the BookingTheaters Table; meaning their Member ID is associated with a given Theater ID and assigned a BookingTheater ID.

When the user clicks into the Booking section (step **204**) of embodiments of the present invention, (which is only viewable to users with an Organization ID assigned to an Exhibitor) the BookingTheaters Table **154** is checked to see which Theater ID's are assigned to their Member ID. In addition, their personal (as well as group) permissions are reviewed (Permissions Table **140**) to verify if the user is allowed to view or edit specific booking information for theaters which they have been assigned. For the purposes of this explanation we will assume that a user's permissions for booking terms, booking requests, booking responses and outstanding requests are set to Read/Write and they have one at least one theater assigned to them.

To submit a booking request to a distributor (step **206**), the user would first search for and select the film they wish to book. A record is created in the Bookings Table **146** and assigned a Booking ID, being used in this instance as a primary key. Added to this record is the Film ID of the selected movie from film table **141**. The user can then select a theater, or theaters, from a list of those they are permitted to make booking requests for. For every theater that is selected another record is created in the Bookings Table with a separate Booking ID. In other words, each Booking ID can have only one Film ID and one Theater ID from theater table **143** associated with it. Therefore, if a user wants to book a given film into three different theaters than three separate Booking ID's need to be created in the Bookings Table. One booking request can be made up of several Booking ID's.

For each theater selected for a given booking request (Booking ID), the user can also enter numerous variables such as Screen Number, Number of Prints, Playdate Week, Minimum Playtime, Rental Terms and Solicitation ID (for the purpose of knowing whether film rental terms have previously been offered by the distributor). Upon submission of the request by the exhibition user, the Bookings Table automatically captures for every Booking ID the Member ID that created the request, as well as the date the request was made and the status of the request. This last field is quite important, for it is the status of the Booking ID which determines whether it is an outstanding request being sent by an exhibitor to a distributor or an incoming response from a distributor to an exhibitor.

The moment the request is submitted the status reflected makes it an outstanding request from an exhibitor. Any of that exhibitor's users with permission to view or edit outstanding booking requests for the theaters in a given request (through group permissions) can see or change the request in the booking section. This also means that in the Bookings Table there may be consecutive Booking ID's for separate requests made by completely different exhibitors. An exhibitor's users will only see their own Booking ID's thanks to the Member ID associated with it.

When the request is first submitted, and becomes an outstanding request, it is first viewable as an incoming request (step **208**) by the distributor whose Organization ID is tied to the Film ID on the Booking ID. However, not just any of the distributor's users can view the incoming request. A distribution user's permission to view or edit incoming booking requests terms, can be modified. The permissions only pertain to the theaters and films that are assigned directly to a specific user in the SalesTheaters Table 136 and FilmAssignments Table **138**; meaning their Member ID is associated with a given Theater ID and assigned a SalesTheater ID and is associated with a given Film ID and assigned a FilmAssignment ID.

When the user logs in (step **210**) and clicks into the Sales section (step **212**) of embodiments of the present invention, (which is only viewable to users with an Organization ID assigned to a Distributor) the SalesTheaters Table 136 is checked to see which Theater ID's are assigned to their Member ID. In addition, the FilmAssignments Table **138** is reviewed to see which Film ID's are assigned to their Member ID. Finally, their personal (as well as group) permissions are reviewed (Permissions table **140**) to verify if the user is allowed to view or edit incoming requests for theaters and films which they have been assigned. For the purposes of this explanation we will assume that a user's permissions for incoming booking requests are set to Read/Write and they have at least one theater and one film assigned to them.

For a distribution user to view an incoming request, they must be assigned to both the Theater ID and Film ID that appear in the Booking ID in the Bookings Table. It should be noted however, that even if the user has the Film ID assigned to their Member ID, they may not be viewing the entire booking request. Because a booking request is actually made up of multiple Booking ID's, there may be Booking ID's with Theater ID's assigned to more than one of the distributor's users. In other words, one incoming booking request can be routed in portions to multiple sales reps working for the same distributor in different territories. Unless, these users have permission to view incoming requests for Theater ID's not specifically assigned to them (through group permissions) they will never see the complete incoming booking request.

This also means that when a distributor's sales reps respond to an incoming request (either accepting the film rental terms, declining them or countering them), they may not be responding to all of the Booking ID's that make up a booking request. For instance, a booking request with ten Booking ID's is booked into ten different theaters with ten different Theater ID's. A distributor's user that only has five of these Theater ID's assigned to their Member ID in the SalesTheaters Table will only respond to five of the Booking ID's that make up the request. If the user counters the status of those Booking ID's will be changed from outstanding request to incoming response and will appear as such to the exhibitor.

Taking this example further, the exhibitor's user would view the incoming response, but only see the response for the five theaters (five Booking ID's) that the distributor responded to. The five additional theaters would still be considered an outstanding booking request by the exhibitor and an incoming booking request by the distributor. (A request with specific Booking ID's can be viewed at the same time by both an exhibition and distribution user with the proper theater and film assignments. The exhibition user will view the request as an outstanding request and the distribution user will view the request as an incoming request.)

If the distribution user has countered the film terms (step **214**) entered by the exhibition user than it will be noted in each Booking ID in the Bookings Table. The exhibition user can counter the distribution user's response (step **216**), changing the status from incoming response, back to outstanding request. This back and fourth negotiation can continue as many times as necessary until both parties confirm the booking (steps **218,220**), or until the first day of the requested playdate week at which point the request (or response) is nulled so that neither an exhibition nor a distribution user can view or respond to it.

The moment that both parties accept and acknowledge a request a record is created in the TheaterScreens Table **164** and assigned a TheaterScreen ID, being used in this instance as a primary key. Added to this record is the Film ID, Theater ID, Playdate Week, Screen Number, Status (as a booked film), Booking ID, Term Week, Week Number, Start Date, End Date and a number of other variables. For every Booking ID in a request that is accepted and acknowledged another record is created in the TheaterScreens Table with a separate TheaterScreen ID. In other words, each TheaterScreen ID can have only one Film ID and one Theater ID associated with it. Therefore, if a distribution user accepts the terms presented by an exhibition user for a film in three theaters and the exhibition user acknowledges the acceptance, than three separate TheaterScreen ID's need to be created in the TheaterScreens Table. Not every Booking ID in a given request needs to be responded to, countered, accepted or declined. Accepting, countering and declining partial request is permitted by both an exhibition user and a distribution user.

As shown in Figure 9b, a Booking Table diagram illustrates the relationships of the appropriate tables, their primary keys and data in the relational database to support the film booking task described above. The arrows point to where the table gets their joining primary key and asterisks next to a field indicate the primary key. For instance, the arrows for the BookingTheaters Table **154** point to the Members Table **132** and the Theaters Table **143** because it is the Theater ID and the Member ID that are being "joined" or "mapped' in this table. TheaterScreens Table **164** points to the Bookings Table **146**, TheatersTable **143** and the FilmTable **141** because the TheaterScreens Table is where a Film ID and Theater ID are combined in a booking (Booking ID) for a given date. In this example, in addition to the member and permissions table, the film and theater tables (entity tables), booking theaters, sales theater and film assignments tables (assignment tables) and TheaterScreens and Bookings tables (information tables) together define the relational structure to perform the bookings task. The relationship of entity, assignment and informational tables to perform other tasks is similar.

### Trailer Placement Request Routine

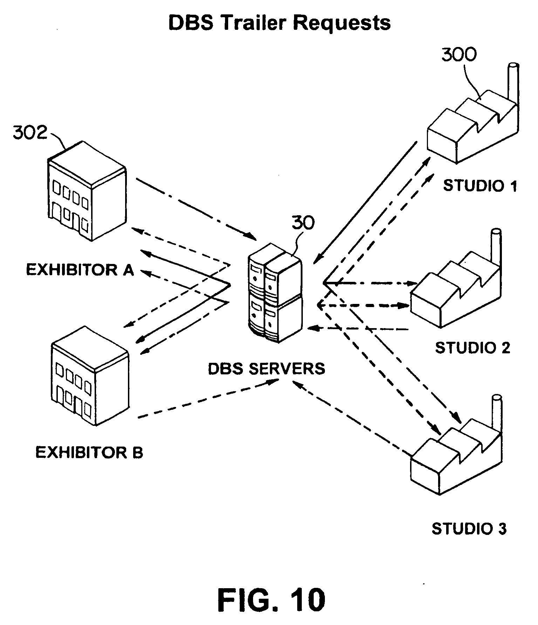

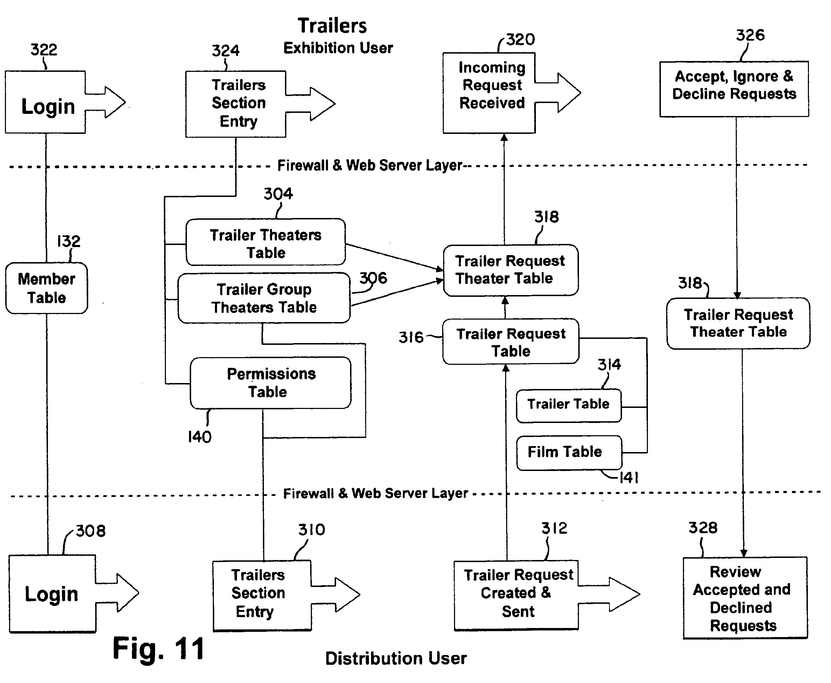

As shown in Figures 10 and 11 rather than have to send numerous trailer placement requests to multiple exhibitors, a studio's exhibitor **300** relations department has to make only one request through the CEM system 30 which gets routed to numerous exhibitors **302**. Rather than have to respond to dozens of different trailer placement requests coming in from numerous studios via various methods (phone, fax, mail, email), an exhibitor can find all of their trailer placement requests in the CEM system and respond to all of them through the CEM web application. The responses get distributed to the appropriate studio. With routing maps set up to guide trailer placement requests between specific users at a distributor and specific users at an exhibitor embodiments of the present invention can facilitate the creation of trailer placement reports.

### Trailer Theater Groups

An exhibition user whose Member ID can be found in the TrailerTheaters Table 304 can create, view and edit trailer theater groups provided their personal permissions for Trailers are set to Read/Write. Such groups allow an exhibitor to bundle theaters together in smaller groups and thus create trailer placement reports for more than one set of theaters. When a group is created a record is created in the TrailerGroup Table and assigned a TrailerGroup ID, being used in this instance as a primary key. At the same time a record is created in the TrailerGroupTheaters Table **306** for every theater being added to the group. Each record has its own TrailerGroupTheater ID, which is employed as a foreign key within the TrailerGroupTheater Table. Each TrailerGroupTheater ID has a specific Theater ID included in the record, as well as a TheaterGroup ID. In the TrailerGroupTheater Table multiple TheaterGroupTheater ID's might have the same TheaterGroup ID, but they all must have a unique Theater ID. In other words, a theater can only be assigned to one group.

### Trailer Placement Requests

When a distribution user logs in (step **308**) to embodiments of the present invention with a unique username and password the system identifies them through the use of their Member ID. This Member ID has personal permissions assigned to it by their company's booking administrator. The ability to view or edit trailers can be modified. When the user clicks into the Trailers section (step **310**) of embodiments of the present invention, the Member Table **132** is checked to see if the Member ID has the appropriate permissions.

To submit a trailer placement request to an exhibitor (step **312**), the user would select one of the trailers they created or a trailer created by someone in their organization from a Trailer table 314. The user must then select a film from Film Table 141 in front of which they wish the trailer to play, a print number, and playdate week, as well as theaters or theater groups at each exhibitor for which they want to submit a request. A personal note may also be included for each exhibitor. Trailers or a trailer first search for and select the film they wish to send a solicitation for.

When the user submits the request to the selected exhibitors (and the exhibitor's theaters) a record is created in the TrailerRequest Table 316 and assigned a TrailerRequest ID, being used in this instance as a primary key. Each record also contains the Trailer ID, the Film ID of the title on which the trailer should be attached and the playdate week. Another table keeps track of which requests are linked to which theater. For every theater that appears in a specific request a record is created in the TrailerRequestTheaters Table 318 and assigned a TrailerRequestTheater ID, which is used as a primary key. A single trailer request can be made up of more than one TrailerRequestTheater ID. Each TrailerRequestTheater ID contains a unique Theater ID, a TrailerRequest ID (used as a foreign key) and the status.

The moment the trailer placement request is submitted the status reflected in the TrailerRequestTheater ID makes it an incoming trailer placement request for an exhibitor (step 320). Any of that exhibitor's users with permission to view or respond to trailer placement requests for the theaters in a given request (through personal or group permissions) can see or respond to the request. This also means that in the TrailerRequestTheaters Table there may be consecutive TrailerRequestTheater ID's for separate requests made by completely different distributors. An exhibitor's users will only see their own TrailerRequestTheater ID's thanks to the Member ID's associated with the Theater ID's in the request. When the request is first submitted, it is viewable as an incoming request by the exhibitor whose Organization ID is tied to the Theater ID in the TrailerRequestTheater ID. However, not just any of the exhibitor's users can view the incoming trailer placement request.

When an exhibition user logs in (step 322) to embodiments of the present invention with a unique username and password the system identifies them through the use of their Member ID. This Member ID has personal permissions assigned to it by their company's booking administrator. The ability to view or edit trailer placement requests can be modified. These permissions only pertain to the theaters that are assigned directly to a specific user in the TrailerTheaters Table **304**; meaning their Member ID is associated with a given Theater ID and assigned a TrailerTheater ID.

When the user clicks into the Trailers section (step **324**) of embodiments of the present invention, the TrailerTheaters Table is checked to see which Theater ID's are assigned to their Member ID. In addition, their personal (as well as group) permissions are reviewed to verify if the user is allowed to view or respond to specific incoming trailer placement requests for theaters which they have been assigned. For the purposes of this explanation we will assume that a user's permissions for trailers are set to Read/Write and they have at least one theater assigned to them.

An exhibition user may only view and respond to trailer placement requests for theaters to which they are assigned for trailers. For an exhibition user to view a trailer placement request, they must be assigned to the Theater ID for which the trailer placement request is being made. It should be noted that an exhibition user may not be viewing the entire trailer placement request. Because a trailer placement request actually contains multiple TrailerRequestTheater ID's, there may be TrailerRequestTheater ID's with Theater ID's assigned to more than one of the exhibitor's users. In other words, one trailer request can be routed in portions to multiple exhibition users working for the same exhibitor. Unless, these users have permission to view the trailer requests for Theater ID's not specifically assigned to them (through the use of group permissions) they will never see the complete trailer request.

An exhibition user can either accept, decline or ignore a trailer placement request. (step **326**) and the distribution user can review the accepted or declined requests (step **328**). When a request is accepted or declined the status field in the requests TrailerRequestTheater ID is updated to Accepted or Declined.

### Showtime Information Routing

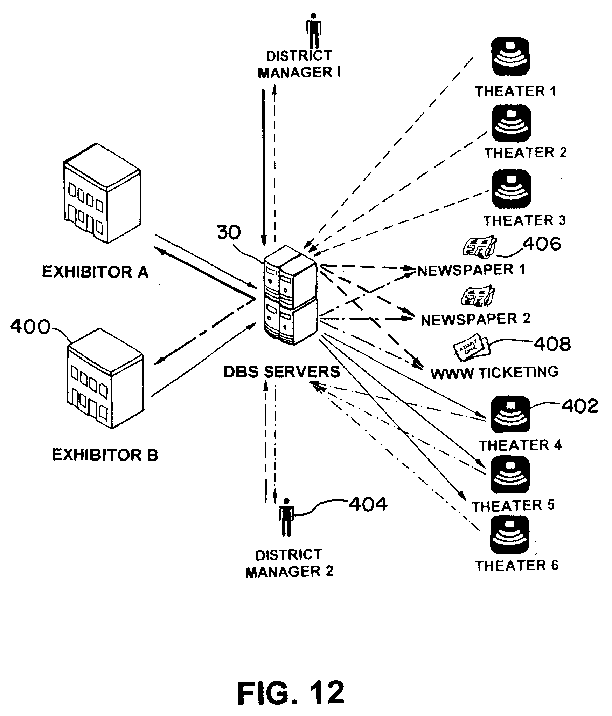

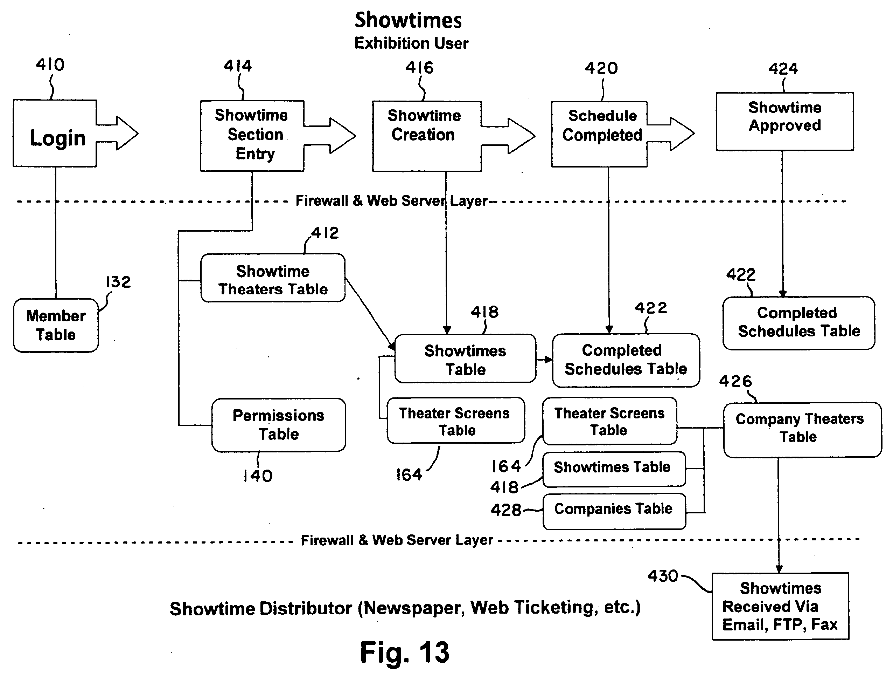

As shown in Figures 12 and 13, every week film buyers at an exhibitor's headquarters **400** (or a film buying service) make booking decisions either on the CEM system or on their existing enterprise system. These bookings are distributed to the appropriate theaters **402** instantly through the CEM system **30**. Managers at the theaters create a showtime schedule on the CEM system or their point-of-sale system and then submit these schedules through CEM to their district managers **404** for approval. District managers approve schedules on the CEM system and the exhibitor's headquarters and theater managers are notified via email or the CEM system. At the same time, newspapers 406 and online ticketing agencies **408** are notified automatically through the CEM system, thus reducing the need to fax or email schedules separately.

The routing maps set up to guide showtime information are different from those that route booking and trailer information in that they don't send information between exhibitors and distributors. Instead, showtime information is communicated within an exhibition company before it is finally approved and routed to an external third-party company to be published.

### Showtime Publication

When an exhibition user logs in (step **410**) to embodiments of the present invention with a unique username and password the system identifies them through the use of their Member ID. This Member ID has personal permissions assigned to it by their company's booking administrator. The ability to view, edit and approve showtimes. These permissions only pertain to the theaters that are assigned directly to a specific user in the ShowtimesTheaters Table **412**; meaning their Member ID is associated with a given Theater ID and assigned a ShowtimeTheater ID.

When the user clicks into the Showtime section (step **414**) of embodiments of the present invention, (which is only viewable to users with an Organization ID assigned to an Exhibitor) the ShowtimeTheaters Table **412** is checked to see which Theater ID's are assigned to their Member ID. In addition, their personal (as well as group) permissions are reviewed in Permissions Table **140** to verify if the user is allowed to view, edit or approve specific showtime information for theaters which they have been assigned. For the purposes of this explanation we will assume that a user's permissions for showtimes is set to Read/Write and they have one at least one theater assigned to them. We will also assume that a second user's permissions for both Showtimes and Showtime Approval are set to Read/Write

When a booking is created in a specific theater and the status of a booking's TheaterScreen ID is changed to Booked it can be viewed by an exhibition user who has the Theater ID assigned to them in the ShowtimeTheaters Table provided their permissions permit them to view or edit showtimes. Only TheaterScreen ID's with a status of Booked can be viewed in Showtimes. TheaterScreen ID's with a status of Pending or Final can not be viewed. This means that someone looking at a ten screen theater in Showtimes may not see films on all ten of the theater's screens for a given playdate week if the TheaterScreen ID's for that theater and playdate week do not have a status of Booked.

As the user enters showtimes for a given film (step 416) a record is created in the Showtimes Table 418 and assigned a Showtime ID, being used in this instance as a primary key. Added to this record is the Showtime, Show Date, Screen and most importantly the TheaterScreen ID, the latter of which is being used as a foreign key. For every showtime that is created another record is created in the Showtimes Table with a separate Showtime ID. In other words, multiple Showtime ID's can have the same TheaterScreen ID and thus refer to the same film. The showtime schedule for a given film on a specific day can be made up of several Showtime ID's but only one TheaterScreen ID.

When a user submits their showtimes for approval (step 420) seven records (one for each day of the week) are created in the CompletedSchedules Table 422 and assigned a CompletedSchedule ID, being used in this instance as a primary key. Each CompletedSchedule ID contains a playdate week, the status of the approval and a unique Theater ID. When a completed showtime schedule is reviewed for approval purposes in embodiments of the present invention the Completed Schedules Table tells the system which TheaterScreen ID's (films) from which Theater ID's (theater) and thus which Showtime ID's (showtimes) to display.

When showtimes are first submitted for approval their status within the CompletedSchedules Table 422 is set to Submitted. A user responsible for approving the showtimes for the Theater ID which appears in the CompletedSchedules Table is then capable of viewing the showtime schedule and approving it. This user must either have that Theater ID assigned directly to the in the ShowtimesTheater Table 418 or be in a group with a user that does in order to view, edit and approve that theater's showtime schedule.

When an exhibition user approves a specific showtime schedule for a given day or days of a playdate week (step 424), the Theater ID found in the CompletedSchedules Table is matched to the same Theater ID found in the CompanyTheaters Table 426. Using this same Theater ID, embodiments of the present invention pull together a report of the associated TheaterScreen ID's and showtimes (through Showtime ID) for day or days of that playdate week and sends it to the Company ID's (third-party companies) listed in the CompanyTheaters Table **426** for that theater. Using the Companies Table **428**, embodiments of the present invention know whether to send the showtime schedule by fax, email or XML (step **430**).

### Box Office Reports & Payment Vouchers

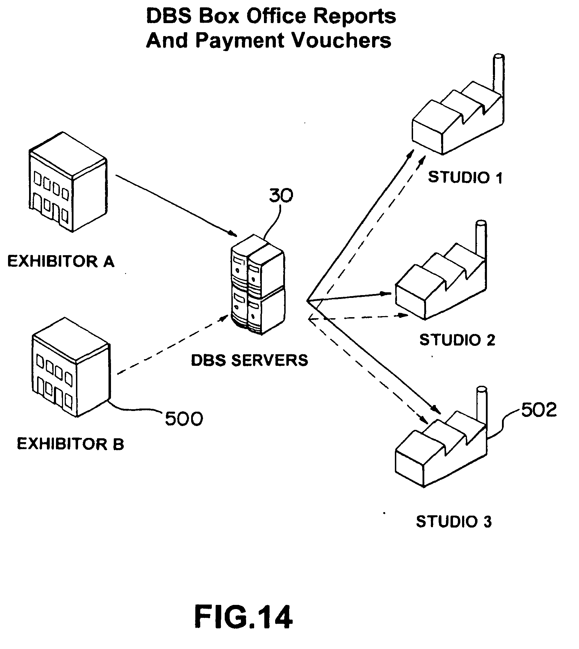

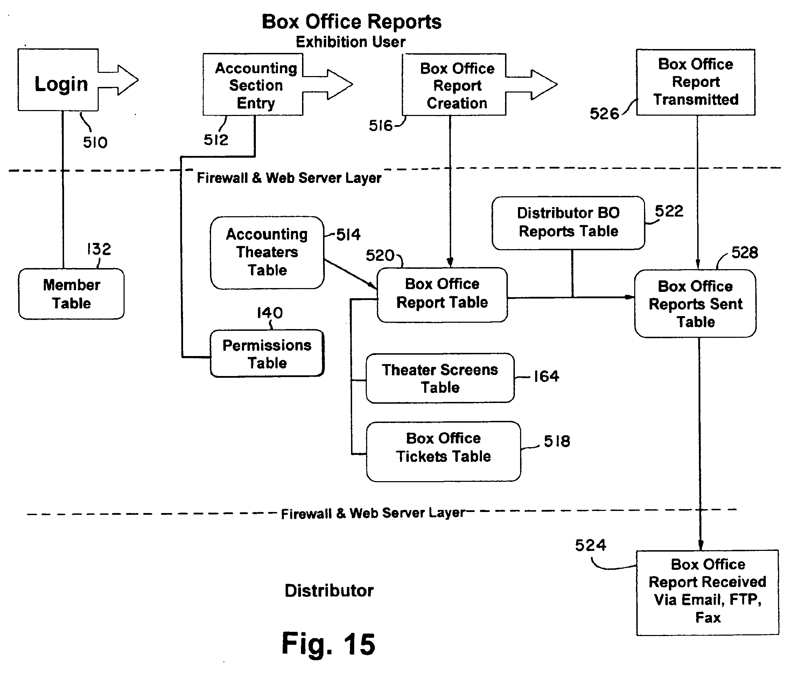

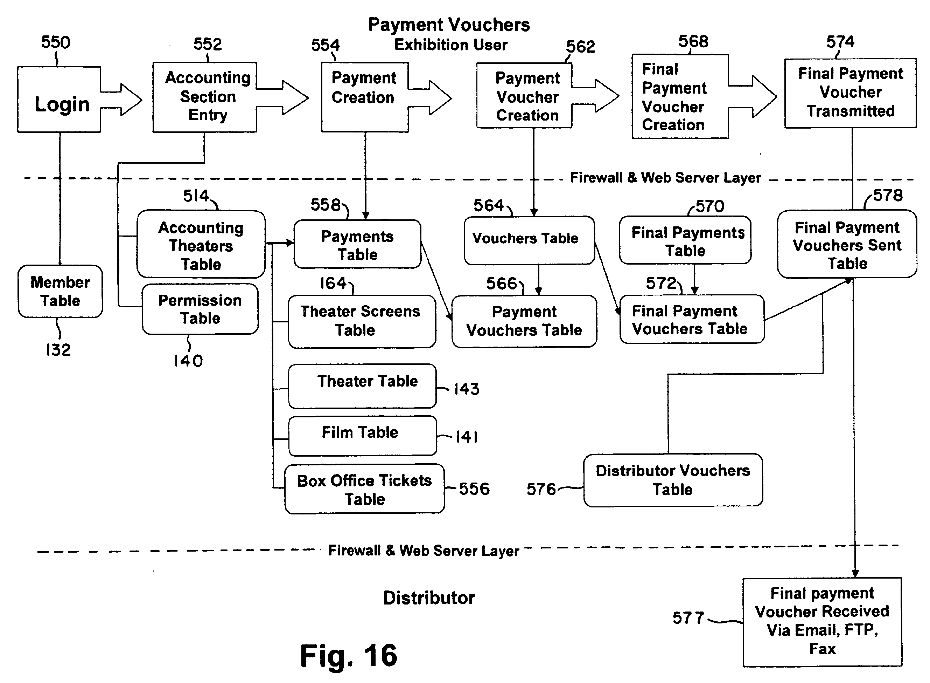

As shown in Figures 14-16, exhibitors **500** can compile all their box office information on the CEM system 30. Rather than send numerous box office reports individually to each studio **502**, exhibitors can create box office reports that get electronically sent via the CEM application to the appropriate studio. If these reports are being sent by an exhibitor's existing enterprise accounting system, they are not forced to integrate wither every studio, just with the CEM application. Exhibitors can compile all their film rental payments and payment vouchers on DBS. Rather than send numerous payment vouchers individually to each studio, exhibitors can create merged payment vouchers that get electronically sent via the CEM application to the appropriate studio. If these payment vouchers are being sent by an exhibitor's existing enterprise accounting system, they are not forced to integrate with every studio, just with the CEM application.

### Theater Accounting Assignments

According to an embodiment of the present invention, an organization's users are assigned to perform specific tasks for a given theater. One of these tasks is accounting, or the payment of film rental based on box office receipts for a given calendar week. A user might be assigned to perform a specific task such as creating payments for more than one theater. As well, a user might be allowed to perform a task for theaters that are not assigned to them if they are in a public group (within their organization) and the sharing rules for that group permit the user to Read/Write payments for theaters assigned to other members of the group. To illustrate an embodiment of the present invention, we will stick with tasks and theaters assigned directly to a user and we will assume their personal permissions for accounting tasks are set to Read/Write.

According to an embodiment of the present invention, for a user to be given accounting responsibilities for a theater they must be a member of an organization with an Organization Type of exhibitor and the theater must belong to that organization (per the Organization ID). They must also have the proper personal permission settings (assigned by their organization's administrator) to have Read/Write permissions for Accounting, Auditing, Ticket Type and Concessions all inside the Accounting section of the application. (It is possible for a user to have permissions for only one of these four tasks.)

When a user is assigned to make payments for a theater (by their company's administrator) a record is created in the AccountingTheaters Table and assigned an AccountingTheater ID, being used in this instance as a primary key. Added to this record are the user's Member ID and the theater's Theater ID, which are now being employed as foreign keys within the AccountingTheaters Table. For every theater a user is assigned to make payments for, another AccountingTheater ID is created. In the AccountingTheaters Table, multiple AccountingTheater ID's may share the same Member ID (and thus be accounting assignments for the same user), but each Theater ID is only used once. In other words, a theater can only be assigned to one user for accounting.

This AccountingTheater ID is the way embodiments of the present invention know which theaters are assigned to specific users for accounting. The AccountingTheater ID is then used in the Profiles Table as a foreign key so that permission can be managed by an administrator.

### Box Office Report Transmission Details

In embodiments of the present invention, an exhibitor can enter details for how to transmit a box office report to a distributor.

When transmission details are entered by an exhibitor for a specific distributor a record is created in the DistributorBOReports Table and assigned a DistributorBOReports ID, being used in this instance as a primary key. Added to this record is the Organization ID of the distributor, being employed as a foreign key within the DistributorBOReports Table. The transmission method, transmission address (fax number, FTP site or email address) are also recorded in this table. For every distributor for which box office report transmission details are entered another DistributorBOReports ID is created. Every DistributorBOReports ID can only contain one Organization ID and each unique Organization ID can only be used once within the DistributorBOReports Table.

This DistributorBOReports ID is the way embodiments of the present invention know where specifically to send a box office report to a distributor and how the report should be transmitted.

### Voucher Transmission Details

In embodiments of the present invention, an exhibitor can enter details for how to transmit a payment voucher to a distributor.

When transmission details are entered by an exhibitor for a specific distributor a record is created in the DistributorVouchers Table and assigned a DistributorVoucher ID, being used in this instance as a primary key. Added to this record is the Organization ID of the distributor, being employed as a foreign key within the DistributorVouchers Table. The transmission method, transmission address (fax number, FTP site or email address) are also recorded in this table. For every distributor for which transmission details are entered another DistributorVoucher ID is created. Every DistributarVoucher ID can only contain one Organization ID and each unique Organization ID can only be used once within the Distributor Vouchers Table.

This DistributorVoucher ID is the way embodiments of the present invention know where specifically to send a payment voucher to a distributor and how the report should be transmitted.

### Box Office Reports

In order to route completed box office reports to the correct distributor, embodiments of the present invention allow administrators at companies with an Organization Type of exhibitor to enter a transmission file format, transmission method and transmission address for every distributor in the system. Only those users within an organization that have accounting permissions to create and send box office reports can distribute them to distributors.

### Box Office Report Routing

Unlike the routing maps set up to guide booking, trailer information and even showtime information, the manner in which box office reports are forwarded by exhibitors to distributors is far more straightforward. Exhibitors send box office reports to a single address at a specific distributor, and thus information does not have to be routed to a specific person within a distribution company based on theater and film assignments. Embodiments of the present invention allow exhibitors to transmit a box office report directly to a distributor supplied address so that the reports can be machine read.

### Box Office Report Creation and Transmission

When an exhibition user logs in (step **510**) to embodiments of the present invention with a unique username and password the system identifies them through the use of their Member ID and Member Table **132**. This Member ID has personal permissions assigned to it by their company's administrator. The ability to view, create and transmit box office reports is a task administered through accounting assignments and permissions. These permissions only pertain to the theaters that are assigned directly to a specific user in the AccountingTheaters Table; meaning their Member ID is associated with a given Theater ID and assigned an AccountingTheater ID.

When the user clicks into the Accounting section of embodiments of the present invention (step **512**), (which is only viewable to users with an Organization ID assigned to an Exhibitor) the AccountingTheaters Table **514** is checked to see which Theater ID's are assigned to their Member ID. In addition, their personal (as well as group) permissions are reviewed to verify if the user is allowed to view, edit or transmit specific accounting information for theaters which they have been assigned. For the purposes of this explanation we will assume that a user's permissions for accounting is set to Read/Write and they have one at least one theater assigned to them.

When a booking is created in a specific theater the status of a booking's TheaterScreen ID is changed to Booked in the TheaterSereens Table 164 for a specific playdate week. On a daily basis exhibition personnel enter box office receipts (box office gross) into the system either manually or through an automated process via a point of sale system for every film playing in a given theater. Gross information is collected by film, by ticket type and by screen and entered into the BoxOfficeTickets Table 518. Each monetary amount for every ticket type is assigned a BoxOfficeTicket ID, being used in this instance as a primary key. Added to this record is the Theater ID of the theater, the TheaterScreen ID for the booking and the Film ID for the film, which are now being employed as foreign keys within the BoxOfficeTickets Table. The business date for the gross is also recorded.

When a user with accounting permissions creates a box office report (step 516) in the accounting section, they select one of the available distributors in the system along with a playdate week. A playdate week is made up of seven consecutive business days starting on Friday and running through the following Thursday. When the box office report is created, the BoxOfficeTickets Table is cross referenced against the TheatreScreens table and records are returned from the BoxOfficeTickets Table for every booking with a FilmID tied to the Organization ID for the selected distributor and playdate week. What is displayed to an end user is the number of tickets sold for every booked film controlled by that distributor, by ticket type, by day, by theater. The price for a given ticket type (which is stored in a TicketTypes Table) is also displayed by day and by theater for every record returned in the results. A total monetary amount is displayed by ticket type, by day, by theater for every film with a total weekly box office gross being derived by adding the summation of all these figures together.

Once a box office report is created it can be printed out by the end user, exported to an external spreadsheet such as Microsoft Excel or electronically transmitted to a distributor. A box office report is stored in a BoxOfficeReport Table 520 and given a BoxOfficeReport ID, being used in this instance as a primary key. Added to this record is the Organization ID for the distributor, being employed as a foreign key within the BoxOfficeReport Table, the playdate week and the date the report was created, among other data.

When an end user sends a box office report to a distributor, for a given playdate week, the Organization ID found in the BoxOfficeReport Table for that week is matched to the same Organization ID in the DistributorBOReports Table 522 to find out how and where to transmit the report. The BoxOfficeReport ID and associated record in which the Organization ID appears for that playdate week is then drawn into a report and using the DistributorBOReports Table, embodiments of the present invention know whether to send the report by fax, email or XML and to which electronic address or fax number.

When a box office report 524 is transmitted (step 526) a record is created in the BoxOfficeReportsSent Table 528 and assigned a BoxOfficeReportsSent ID, being used in this instance as a primary key. Added to this record is the Organization ID for the distributor and the BoxOfficeReport ID for the report being sent, which are being employed as foreign keys within the BoxOfficeReportsSent Table. The playdate week of the box office report, the Member ID of the exhibition user who transmitted the report and the date it was sent to a distributor are also recorded. This is how embodiments of the current invention inform users that a box office report has previously been transmitted, when and by whom.

### Payment Vouchers

In order to route completed payment vouchers to the correct distributor, embodiments of the present invention allow administrators at companies with an Organization Type of exhibitor to enter a transmission file format, transmission method and transmission address for every distributor in the system. Only those users within an organization that have accounting permissions to create and send payment vouchers can distribute them to distributors.

### Payment Voucher Routing

Unlike the routing maps set up to guide booking, trailer information and even showtime information, the manner in which payment vouchers are forwarded by exhibitors to distributors is far more straightforward. Exhibitors send payment vouchers to a single address at a specific distributor, and thus information does not have to be routed to a specific person within a distribution company based on theater and film assignments. Embodiments of the present invention allow exhibitors to transmit a payment voucher directly to a distributor supplied address so that vouchers can be machine read.

### Payment Voucher Creation and Transmission

When an exhibition user logs in (step **550**) to embodiments of the present invention with a unique usemame and password the system identifies them through the use of their Member ID in Member table **132**. This Member ID has personal permissions assigned to it by their company's administrator. The ability to view, create and transmit payment vouchers is a task administered through accounting assignments and permissions. These permissions only pertain to the theaters that are assigned directly to a specific user in the AccountingTheaters Table; meaning their Member ID is associated with a given Theater ID and assigned an AccountingTheater ID.

When the user clicks into the Accounting section of embodiments of the present invention (step **552**), (which is only viewable to users with an Organization ID assigned to an Exhibitor) the AccountingTheaters Table **514** is checked to see which Theater ID's are assigned to their Member ID. In addition, their personal (as well as group) permissions are reviewed to verify if the user is allowed to view, edit or transmit specific accounting information for theaters which they have been assigned. For the purposes of this explanation we will assume that a user's permissions for accounting is set to Read/Write and they have one at least one theater assigned to them.

When a booking is created in a specific theater the status of a booking's TheaterScreen ID is changed to Booked in the TheaterScreens Table for a specific playdate week. A playdate week is made up of seven consecutive business days starting on Friday and running through the following Thursday. When a user with accounting permissions creates a film rental payment, box office correction, distributor correction or film rental settlement in the accounting section, they select one of the available distributors in the system along with a playdate week. (In the case of settlement payments a film is chosen and all playdate weeks are returned).

When the initial payment is created (step **554**), the TheaterScreens Table **164** is cross referenced against the Theater Table **143** to find the theater, the Film Table **141** to find the film and the Booking Table to pull the correct terms for a specific playdate week. This information is shown to the end user along with relevant data and most importantly the weekly box office gross by film, by theater, by screen as found in the BoxOfficeTickets Table **556** for the given distributor and playdate week being queried.

When a payment is made a record is created in the Payments Table **558** and assigned a Payment ID, being used in this instance as a primary key. Added to this record are the TheaterScreen ID and Film ID for every booking included in the payment, which are being employed as foreign keys within the Payments Table. A weekly box office gross and amount paid is also recorded for all the distributor's films playing in all the exhibitor's theaters, screen by screen. For every screen in every theater that a film played on during a given playdate in which film rental is being paid, another record is created in the Payments table. Numerous Payment ID's may contain the same Film ID, same Theater ID and even same Playdate Week, but they will all contain different TheaterScreen ID's representing different prints of the same film playing in a single theater during a given date range.

Once a user has created a payment in the system they are required to turn it into a payment voucher. Traditionally a voucher is used to inform bookkeepers and accounting departments how much film rental to pay a distributor for a given playdate week. When a user turns a payment into a voucher (step **560**) a record is created in the Vouchers Table 562 and assigned a Voucher ID, being used in this instance as a primary key. Added to this record is the Organization ID which is being employed as a foreign key in the Vouchers Table to denote the distributor being paid. The amount and playdate week(s) being paid are also recorded.

At the same time the record is created in the Vouchers Table, a record is created in the Payment Vouchers Table **564** and assigned a PaymentVoucher ID, being used in this instance as a primary key. Added to this record are two IDs being used as foreign keys in the PaymentVouchers Table; a Payment ID, to refer back to the original payment that was created, and a Voucher ID, to tie the payment voucher to a specific voucher.

Several payment vouchers can be merged together into a single final payment. For instance, an exhibitor might make an on account payment, a settlement payment and a box office correction payment, turn all the payments into vouchers and merge them into one payment in an effort to make one larger payment rather than three smaller ones. When a user merges payment vouchers into a final payment (step **568**) a record is created in the FinalPayments Table **570** and assigned a FinalPayment ID, being used in this instance as a primary key. Added to this record is the Organization ID which is being employed as a foreign key in the Vouchers Table to denote the distributor being paid. The amount being paid, the date it was paid and even such data as a check number, if applicable.

At the same time the record is created in the FinalPayments Table, a record is created in the FinalPaymentVouchers Table **572** and assigned a FinalPaymentVoucher ID, being used in this instance as a primary key. Added to this record are two ID's being used as foreign keys in the FinalPaymentVouchers Table; a FinalPayment ID, to refer back to the final payment that was created when merging payment vouchers, and a Voucher ID, to tie the final payment voucher to the individual vouchers which are being merged.

Once a final payment voucher is created it can be printed out by the end user, exported to an external spreadsheet such as Microsoft Excel or electronically transmitted to a distributor (step **574**). When an end user sends a final payment voucher to a distributor, the Organization ID found in the FinalPayments Table for that final payment is matched to the same Organization ID in the DistributorVouchers Table to find out how and where to transmit the final payment voucher. The FinalPaymentVoucher IDs with associated records in which the FinalPayment ID appears are then then drawn into a single voucher and using the DistributorVouchers Table **576**, embodiments of the present invention know whether to send the report by fax, email or XML and to which electronic address or fax number.

When a final payment voucher **577** is transmitted a record is created in the FinalPaymentVouchersSent Table **578** and assigned a FinalPaymentVouchersSent ID, being used in this instance as a primary key. Added to this record is the Organization ID for the distributor and the Voucher ID's for the final payment voucher being sent, which are being employed as foreign keys within the FinalPaymentVouchersSent Table. The Member ID of the exhibition user who transmitted the final payment voucher and the date it was sent to a distributor are also recorded. This is how embodiments of the current invention inform users that a final payment voucher has previously been transmitted, when and by whom.

While particular embodiments of the present invention have been shown and described, it will be obvious to those skilled in the art that the invention is not limited to the particular embodiments shown and described and that changes and modifications may be made without departing from the spirit and scope of the inventions claimed. According to a first further aspect of the invention, a system for cinema exhibition management and communication between motion picture exhibitors and distributions among a plurality of users is provided, the system comprising:
at least one central relational database to support execution of different user tasks for one or more CEM modules, said database organized and accessed according to the relationships between data items defined by a plurality of member, entity, assignment, permission and information tables, each table including records each having a primary key that identifies the record and data associated therewith;
at least one central application server;
a cinema exhibition management (CEM) application on said application server;
a plurality of remote user computer terminals for accessing the CEM application, said CEM application configured to interface with the relational database to (a) check user permissions and assignments to provide user access to authorized cinema modules and tasks therefore, (b) filter records from the database in accordance with a selected task, permissions and assignments and route the records to the user, and (c) change the status of records in the database upon completion of the task so that at least one different user can view and perform additional tasks associated with those records; and
a communication network for interconnecting the central data server and database, central application server, and said plurality of user computer terminals to perform selected tasks and exchange cinema exhibition data without direct communication between any two users, all communications and cinema exhibition data passing through said centralized data and application servers.

According to a first embodiment of the first further aspect of the invention, it is provided that in response to a distribution user selection of the film solicitations module and a solicit film bookings task, the CEM application:
checks a Sales Theaters table and a Film Assignments table to determine which Theater IDs and Film IDs are assigned to the distribution user's Member ID in the member table,
creates a first record in a Solicitations table, assigns a Solicitations ID as the primary key and adds a Film ID as data to the record for a user selected film,
creates a second record in a Bookings table, assigns a Booking ID as the record primary key, and adds the Film ID and Solicitation ID as data to the record,
replicates the second record in the Bookings table with different Booking IDs for each of one or more theaters selected by the distribution user from a list of theaters assigned to said user;
enters distribution user specified solicitation data into the first record and replicates the data into each of said second records to generate an outgoing request of solicitation; and
upon submission of the outgoing request, changes the status of the solicitation from outgoing request from the distribution user to an incoming response to one or more exhibition users having the permission to view or edit the incoming response for the theaters specified in the solicitation.

According to a second embodiment of the first further aspect of the invention, it is provided that in response to an exhibition user selection of the film booking module and a request film bookings task, the CEM application:
checks a Booking Theaters table to determine which Theater IDs are assigned to the user's Member ID,
creates a first record in a Bookings table, assigns a Booking ID as the primary key and adds a Film ID as data to the record for a user selected film,
replicates the first record in the Bookings table with different Bookings IDs for each of one or more theaters selected by the exhibition user from a list of assigned theaters;
enters exhibition user specified booking data into the first record and replicates the data into each of said records to generate an outgoing request; and
upon submission of the outgoing request, changes the status from outgoing request from the exhibition user to an incoming response to one or more distribution users having the permission to view or edit the incoming response for the film specified by the Film ID in the response.

According to a third embodiment of the first further aspect of the invention, it is provided that in response to an exhibition user selection of the showtimes module and a distribute showtimes task, the CEM application:
checks a Showtime Theaters table to determine which Theater ID's are assigned to the user's Member ID;
displays films in the assigned theaters having a booked status to the exhibition user for a selected playdate week;
creates a first record in a Showtimes table, assigns a Showtime ID as the primary key and adds showtime, show data, screen and Theater Screen ID as data to the record;
replicates the first record in the Showtimes table for different showtimes with different Showtime IDs;
upon submission of a showtimes schedule for approval, creates a second record for each day of the weak in a CompletedSchedules table and assigns a CompletedSchedule ID containing a playdate week, an approval status set to submitted and a theater ID as the primary key for the record and the data from said first records;
displays the showtimes schedule to another user responsible for approving the showtimes for the Theater ID appearing in the CompletedSchedules table; and
upon approval by said another user, changes the approval status to approved and matches the theater ID in the Completed Schedules table to the same theater ID in a CompanyTheaters table to generate a showtimes report that is distributed to companies listed in the CompanyTheaters table.

According to a forth embodiment of the first further aspect of the invention, it is provided that in response to a distribution user selection of the trailers request and placement module and a request trailer placement task, the CEM application:
checks a Trailer Theaters table to determine which Theater ID's are assigned to the distribution user's Member ID;
in response to user selection of a trailer and a film to which the trailer is attached, creates a first record in a TrailerRequest table, assigns a TrailerRequest ID as the primary key and adds a trailer ID and a film ID;
for each requested theater, creates a record in a TrailerRequestTheaters table, assigns a TrailerRequestTheater ID as the primary key, and adds the Theater ID and TrailerRequest ID to match each trailer request to a specific theater; and
upon submission of the trailer request, changes the status of the trailer request from an outgoing request from the distribution user to an incoming request to one or more exhibition users having the permission to view or edit the incoming response for the assigned theaters.

According to a fifth embodiment of the first further aspect of the invention, it is provided that in response to a distribution user selection of the box office reports module and the distribute box office reports task, the CEM application:
checks an Accounting Theaters Table to determine which Theater IDs are assigned to the distribution user's Member ID;
in response to user selection of a distributor and a playdate week, cross references a BoxOffice Tickets Table against a TheaterScreens Table to retrieve records for every booking with a Film ID tied to the selected distributor and playdate week and generate a box office report as a record in a BoxOfficeReport Table;
matches the selected distributor to a Distributor BOReports Table to find out how and where to transmit the box office report;
transmits the report to the selected distributor; and
creates a record in a BoxOfficeReportsSent Table for the transmitted report.

According to a sixth embodiment of the first further aspect of the invention, it is provided that in response to a distribution user selection of the vouchers module and the distribute vouchers task, the CEM application:
Checks an Accounting Theaters Table to determine which Theater IDs are assigned to the distribution user's Member ID;
In response to user selection of a distributor and a playdate week, cross references a TheaterScreens Table against a Theater Table, a Film Table and a Bookings table to find the theater, film and terms for a specific playdate week and retrieves the weekly box office gross by film, by theater and by screen from a BoxOfficeTickets table to create a payment;
Creates a voucher from the payment to pay the distributor for the selected playdate week by creating a record in a Vouchers Table including the amount paid, playdate week and the distributor;
Creates a record in a Payment Voucher Table including a payment ID that refers back to the payment and a voucher ID to tie the payment voucher to a specific voucher;
Merges multiple payment vouchers, if any, for the distributor into a final payment by creating a record in a FinalPayments Table;
Creates a record in a Final Payment Vouchers Table including a final payment ID that refers back to the final payment and a voucher ID to tie the final payment voucher to the individual vouchers being merged;
Matches the selected distributor to a Distributor Vouchers Table to find out how and where to transmit the final payment voucher;
Transmits the final payment voucher to the selected distributor; and
Creates a record in a FinalPaymentVouchersSent Table for the final payment voucher.

According to a seventh embodiment of the first further aspect of the invention, said tasks include solicit Film Bookings, request Film Bookings, schedule and distribute Showtimes, request Trailer Placement, distribute Box Office Report, and distribute Vouchers.

According to a first example of the seventh embodiment of the first further aspect of the invention, said member table includes records of user specific identification data, said entity tables includes at least film, theater and trailer tables including records associated with different film, theater and trailer entities, respectively, said assignment tables includes records that map film, theater and trailer entities to users for specific modules, said permissions table includes records that authorize read or write capability to users for specific tasks within modules, and said information tables includes records that store cinema exhibition and distribution data associated with the performance of tasks

According to an eighth embodiment of the first further aspect of the invention, the CEM. application is configured to be accessed by a plurality of remote user computer terminals.

According to a first example of the eighth embodiment of the first further aspect of the invention, the central server, database, central application server, and said plurality of remote user computer terminals are interconnected by a communication network, such that selected tasks may be performed and cinema exhibition data may be exchanged without direct communication between any two users, all communications and cinema exhibition data passing through said centralized data and application servers.

According to a second further aspect of the invention, a method of cinema exhibition management and communication between motion picture exhibitors and distributions among a plurality of users is provided, the method comprising:
providing at least one central database server for storing cinema exhibition data in a relational database to support execution of different user tasks for one or more GEM modules, said database organized and accessed according to the relationships between data items defined by a plurality of member, entity, assignment, permission and information tables, each table including records each having a primary key that identifies the record and data associated therewith;
checking member, user permissions and assignment tables to provide user access to authorized modules from among a set comprising at least one of film solicitation, film booking, showtimes, trailer requests and placements, box office reports and payment vouchers to the user for selection of a module and authorized tasks for a user selected module;
filtering records from the information tables in the relational database in accordance with the selected task, user permissions, assignments and entity tables;
routing the records to the user to prompt performance of the selected task; and
changing the status of one or more of said records upon performance of the task so that at least one different user can view and perform additional tasks associated with the records.

According to a first embodiment of the second further aspect of the invention, all communications and data to perform the selected tasks are routing through a central hub including the central database server without direct communication or data exchange between any two users.

According to a second embodiment of the second further aspect of the invention, said member table includes records of user specific identification data, said entity tables include at least film, theater and trailer tables including records associated with different film, theater and trailer entities, respectively, said assignment tables include records that map film, theater and trailer entities to users for specific modules, said permissions table includes records that authorize read or write capability to users for specific tasks within modules, and said information tables includes records that store cinema exhibition and distribution data associated with the performance of tasks

According to a third embodiment of the second further aspect of the invention, said method further comprises:
checking member, user permissions, and assignment tables for said records to authorize said at least one different user to view and perform additional tasks associated with the records.

According to a first example of the third embodiment of the second further aspect of the invention, performance of the task by the user generates an outgoing request, which upon submission changes status to an incoming request of a specific task by said at least one different user.

In the first example of the third embodiment of the second further aspect of the invention, the outgoing request may be a film solicitation and the specific task requested may be a film booking.

According to third further aspect of the invention, a computer-readable medium storing computer-readable code is provided, the code when executed causing one or more processors to perform acts comprising:
storing cinema exhibition data in a relational database to support execution of different user tasks for one or more CEM modules, said database organized and accessed according to the relationships between data items defined by a plurality of member, entity, assignment, permission and information tables, each table including records each having a primary key that identifies the record and data associated therewith;
   checking member, user permissions and assignment tables to provide user access to authorized modules from among a set comprising at least one of film solicitation, film booking, showtimes, trailer requests and placements, box office reports and payment vouchers to the user for selection of a module and authorized tasks for a user selected module;
filtering records from the information tables in the relational database in accordance with the selected task, user permissions, assignments and entity tables;
routing the records to the user to prompt performance of the selected task; and
changing the status of one or more of said records upon performance of the task so that at least one different user can view and perform additional tasks associated with the records.

## Claims

1. A web-based system for cinema exhibition management and communication between motion picture exhibitors and distributions among a plurality of users, comprising:
at least one central database server for storing cinema exhibition data in a relational database to support execution of different user tasks for one or more CEM modules, said database organized and accessed according to the relationships between data items defined by a plurality of member, entity, assignment, permission and information tables, each table including records each having a primary key that identifies the record and data associated therewith, said member table including records of user specific identification data, said entity tables including at least film, theater and trailer tables including records associated with different film, theater and trailer entities, respectively, said assignment tables including records that map film, theater and trailer entities to users for specific modules, said permissions table including records that authorize read or write capability to users for specific tasks within modules, and said information tables including records that store cinema exhibition and distribution data associated with the performance of tasks;
at least one central web application server;
a cinema exhibition management (CEM) application on said web application server;
a plurality of remote user computer terminals for accessing the CEM application, said CEM application configured to interface with the relational database to (a) check the member table to verify user log on, (b) check user permission and assignment tables to provide user access to authorized modules from among a set comprising at least one of film solicitation, film booking, showtimes, trailer requests and placements, box office reports and payment vouchers to the user for selection of a module, (c) check user permissions and assignment tables for a selected module to provide user access to authorized tasks for selection of a task (d) filter records from the information tables in relational database in accordance with the selected task, user permissions and assignments tables and route those records to the user, and (e) store any additional cinema exhibition data provided in performance of the selected in the existing or new records in the information tables in the relational database on said central data storage server; and
a communication network for interconnecting the central database server and relational database, central web application server, and said plurality of user computer terminals to perform selected tasks and exchange cinema exhibition data without direct communication between any two users, all communications and cinema exhibition data passing through said centralized data and web application servers.

2. The web-based system of claim 1, wherein said tasks include solicit Film Bookings, request Film Bookings, schedule and distribute Showtimes, request Trailer Placement, distribute Box Office Report, and distribute Vouchers.

3. The web-based system of claim 2, wherein the assignment tables include booking theaters, showtime, sales, film assignments and trailer theaters tables..

4. The web-based system of claim 3, wherein the information tables include bookings, solicitations, trailer request theater, trailer screens, showtimes and completed schedules showtimes tables.

5. The web-based system of claim 1, wherein the performance of the selected task generates an outgoing request for the originating user, said CEM application stores any data associated with the outgoing request in the existing or new records in the information tables and uses the permissions and assignment tables to filter the outgoing request to form an incoming request of a specific task for one or more receiving users.

6. The web-based system of claim 5, wherein said CEM application prompts said at least one said different receiving users to perform the task, generates a response that is routed back to the originating users and stores any data associated with the response in the existing or new records.

7. The web-based system of claim 1, wherein said CEM application changes the status of the record associated with the performance of a task allowing authorized users to view and perform additional tasks on or with said record.

8. The web-based system of claim 1, wherein the performance of said task generates an output that is distributed to other users.

9. The web-based system of claim 1, wherein the output is distributed to some users or third parties via the CEM application and to other users or third parties via email, FTP, web service or fax.

10. The web-based system of claim 1, wherein the performance of the selected task generates an outgoing request for an originating user, said outgoing request specifying data parameters for one or more records and changing the status of the records in the information tables, said CEM application mapping the specified data parameters against the assignment and permissions tables to identify the one or more receiving users authorized to view or perform a next task on the records having changed status.

11. The web-based system of claim 1, wherein the CEM application is configured to be accessed by a plurality of remote user computer terminals.

12. The web-based system of claim 11, wherein the central database server, relational database, central web application server, and said plurality of remote user computer terminals are interconnected by a communication network, such that selected tasks may be performed and cinema exhibition data may be exchanged without direct communication between any two users, all communications and cinema exhibition data passing through said centralized data and web application servers.
